(19) Europäisches Patentamt / European Patent Office / Office européen des brevets

(11) **EP 4 510 353 A1**

(12) **EUROPEAN PATENT APPLICATION**
published in accordance with Art. 153(4) EPC

(43) Date of publication:
**19.02.2025 Bulletin 2025/08**

(21) Application number: **22961792.3**

(22) Date of filing: **14.10.2022**

(51) International Patent Classification (IPC):
$H01M\ 50/358^{(2021.01)}$     $H01M\ 50/244^{(2021.01)}$

(52) Cooperative Patent Classification (CPC):
**H01M 50/209; H01M 50/244; H01M 50/249;
H01M 50/30; H01M 50/35; H01M 50/358;
Y02E 60/10**

(86) International application number:
**PCT/CN2022/125420**

(87) International publication number:
**WO 2024/077605 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
Co., Limited
Ningde, Fujian 352100 (CN)**

(72) Inventors:
• **KE, Jianhuang
Ningde, Fujian 352100 (CN)**
• **CHEN, Xiaobo
Ningde, Fujian 352100 (CN)**
• **LI, Yao
Ningde, Fujian 352100 (CN)**

(74) Representative: **Ran, Handong et al
Maucher Jenkins
Seventh Floor Offices
Artillery House
11-19 Artillery Row
London SW1P 1RT (GB)**

(54) **BATTERY AND ELECTRIC APPARATUS**

(57)     Provided in the embodiments of the present application are a battery and an electric apparatus, which can ensure the safety performance of the battery. A battery (10) comprises: at least one battery cell (20) having a first pressure relief mechanism (213); and a box body (110) having a second pressure relief mechanism (113). An exhaust passage is formed between the first pressure relief mechanism (213) of the at least one battery cell (20) and the second pressure relief mechanism (113) of the box body (110). When the first pressure relief mechanism (213) is actuated, the exhaust passage is used for emitting the emission of the at least one battery cell (20) from the first pressure relief mechanism (213) to the second pressure relief mechanism (113), and the minimum length of an emission path of the emission in the exhaust passage is between 0.1 m and 10 m. By designing the exhaust passage in the box body, a shortest emission path of the emission of the battery cell in the box body can be controlled, thus controlling the temperature of the emission emitted from the box body, and ensuring the safety performance of the battery.

FIG. 4

**Description**

**TECHNICAL FIELD**

This application relates to the field of batteries, and in particular, to a battery and an electrical device.

**BACKGROUND**

With the advancement of the times, by virtue of high environmental friendliness, low noise, low cost of use, and other advantages, electric vehicles enjoy a great market prospect and can effectively promote energy conservation and emission reduction as well as the development and progress of society. Battery technology is crucial to the development of electric vehicles.

In the development of battery technology, safety is a non-negligible issue in addition to improvement of battery performance. If the safety of a battery is not guaranteed, the battery is not suitable for use. Therefore, how to ensure the safety of the battery is a pressing technical challenge in the battery technology.

**SUMMARY**

This application provides a battery and an electrical device to ensure high safety performance of the battery.

According to a first aspect, a battery is provided. The battery includes: at least one battery cell, including a first pressure relief mechanism; and a box, configured to accommodate the at least one battery cell, where the box includes a second pressure relief mechanism. An exhaust passage is formed between the first pressure relief mechanism of the at least one battery cell and the second pressure relief mechanism of the box. When the first pressure relief mechanism is actuated, the exhaust passage is configured to expel emissions of the at least one battery cell from the first pressure relief mechanism to the second pressure relief mechanism. A minimum length of an exhaust path of the emissions in the exhaust passage is 0.1 m to 10 m.

Based on the technical solution of an embodiment of this application, an exhaust passage is formed between the first pressure relief mechanism of at least one battery cell and the second pressure relief mechanism of the box. The exhaust passage disposed inside the box causes the minimum length of the exhaust path of the emissions of the at least one battery cell in the exhaust passage to fall within a range of 0.1 m to 10 m, thereby preventing an overly short exhaust path that causes overtemperature of the emissions expelled from the box, and also preventing an overly long exhaust path that makes the emissions accumulate in the box and generate a high pressure causing severe damage to the hermeticity of the box. Therefore, this technical solution can control both the temperature of the emissions out of the box and the pressure generated by the emissions inside the box, thereby comprehensively ensuring high safety performance and sealing performance of the battery.

In some possible embodiments, the minimum length of the exhaust path is 0.3 m to 5 m.

Based on the technical solutions disclosed in these embodiments, the minimum length of the exhaust path is 0.3 m to 5 m, the emissions make a relatively small impact on the box of the battery, and the box of the battery can keep in a normal state without incurring abnormal phenomena, thereby reliably ensuring high overall safety performance of the battery.

In some possible embodiments, the minimum length of the exhaust path is greater than a shortest distance between the first pressure relief mechanism and the second pressure relief mechanism.

Based on the technical solutions disclosed in these embodiments, the emissions do not travel the shortest distance between the first pressure relief mechanism and the second pressure relief mechanism to exit out of the box, but travel a relatively long exhaust path inside the box. This technical solution reduces the temperature of the emissions inside the box, thereby further enhancing safety performance of the battery.

In some possible embodiments, the minimum length B of the exhaust path and a volumetric energy density E of the battery cell satisfy the following relationship: $0.0001 \, \text{m/(Wh/L)} \leq B/E \leq 0.01 \, \text{m/(Wh/L)}$, where B is in units of m, and E is in units of Wh/L.

Based on the technical solutions disclosed in these embodiments, the volumetric energy density of the battery cell and the minimum length of the exhaust path need to satisfy a specified proportional relationship. Specifically, when the volumetric energy density of the battery cell is constant, the ratio of the minimum length of the exhaust path to the volumetric energy density of the battery cell is greater than or equal to 0.0001 m/(Wh/L), thereby ensuring a sufficient length of the exhaust path, and in turn, cooling the emissions of the battery cell inside the box sufficiently. Further, when the volumetric energy density of the battery cell is constant, the ratio of the length of the exhaust path to the volumetric energy density of the battery cell is less than or equal to 0.01 m/(Wh/L). This technical solution prevents an overly long exhaust passage inside the box, and in turn, prevents an excessive amount of emissions from accumulating inside the box and resulting in overpressure inside the box. Therefore, this technical solution can ensure not only high safety performance of the battery, but also high overall performance such as hermeticity of the battery.

In some possible embodiments, the minimum length B of the exhaust path and a volumetric energy density E of the battery cell satisfy the following relationship: 0.0002 m/(Wh/L) ≤ B/E ≤ 0.005 m/(Wh/L).

Based on the technical solutions disclosed in these embodiments, the box of the battery can keep in a normal state reliably. In this case, the overall performance of the battery is good, and both the safety performance and the sealing performance of the battery are ensured to be superior.

In some possible embodiments, the minimum length B of the exhaust path, a shortest distance A between the first pressure relief mechanism and the second pressure relief mechanism, and a volumetric energy density E of the battery cell satisfy the following relationship: 0.0015 L/Wh ≤ (B/A)/E ≤ 0.08 L/Wh, where A and B are in units of m, and E is in units of Wh/L.

Based on the technical solutions disclosed in these embodiments, the design of the minimum length of the exhaust path not only considers the volumetric energy density of the battery cell, but also considers the shortest distance between the first pressure relief mechanism and the second pressure relief mechanism, thereby comprehensively ensuring the design of the minimum length of the exhaust path to be adaptable in the battery, and in turn, well enhancing the performance metrics such as safety and sealing performance of the battery.

In some possible embodiments, the minimum length B of the exhaust path, the shortest distance A between the first pressure relief mechanism and the second pressure relief mechanism, and the volumetric energy density E of the battery cell satisfy the following relationship: 0.003 L/Wh ≤ (B/A)/E ≤ 0.04 L/Wh.

Based on the technical solutions disclosed in these embodiments, the box of the battery can keep in a normal state reliably. In this case, the overall performance of the battery is good, and both the safety performance and the sealing performance of the battery are ensured to be superior.

In some possible embodiments, the battery further includes: a fencing mechanism, configured to close in to form a first exhaust space corresponding to the first pressure relief mechanism of the at least one battery cell. An opening communicating with the first exhaust space is created on the fencing mechanism. The first exhaust space is configured to form at least a part of the exhaust passage.

Based on the technical solutions disclosed in these embodiments, a fencing mechanism is disposed inside the box of the battery. Therefore, the fencing mechanism can form an effective exhaust passage inside the box. Through pertinent design for the fencing mechanism, the length of the exhaust passage and the minimum length of the exhaust path in the exhaust passage can be controlled effectively, so as to meet the safety requirements and performance requirements of the battery.

In some possible embodiments, the opening is located at a position in the fencing mechanism, the position being away from the second pressure relief mechanism.

Based on the technical solutions disclosed in these embodiments, the opening is located at a position away from the second pressure relief mechanism in the fencing mechanism, thereby making the distance relatively long between the opening and the second pressure relief mechanism, thereby further prolonging the exhaust path of the emissions of the battery cell inside the box of the battery, further reducing the temperature of the emissions arriving at the second pressure relief mechanism, and enhancing the safety performance of the battery.

In some possible embodiments, the opening is oriented toward a box wall in the box, the box wall being different from a box wall on which the second pressure relief mechanism is located.

Based on the technical solutions disclosed in these embodiments, the opening of the fencing mechanism may be designed appropriately based on the arrangement of the second pressure relief mechanism of the box, thereby preventing the opening from being oriented toward the box wall on which the second pressure relief mechanism is located, and increasing the distance between the opening and the second pressure relief mechanism. This further prolongs the exhaust path of the emissions of the battery cell inside the box of the battery, further reduces the temperature of the emissions arriving at the second pressure relief mechanism, and enhances the safety performance of the battery.

In some possible embodiments, the opening is located in a middle region of the box.

Based on the technical solutions disclosed in these embodiments, the opening of the fencing mechanism is located in the middle region of the box, thereby also increasing the distance between the opening and the second pressure relief mechanism located on the box wall of the box, and in turn, prolonging the exhaust path of the emissions of the battery cell inside the box of the battery, further reducing the temperature of the emissions arriving at the second pressure relief mechanism, and enhancing the safety performance of the battery.

In some possible embodiments, a plurality of the fencing mechanisms are disposed, and the plurality of fencing mechanisms are spaced apart.

Based on the technical solutions disclosed in these embodiments, a plurality of fencing mechanisms are disposed in the box of the battery. The plurality of fencing mechanisms may be flexibly disposed and adjusted according to actual needs, so as to more conveniently guide the emissions of the battery cells at different positions in the box, and further enhance the overall safety performance of the battery.

In some possible embodiments, openings of two adjacent fencing mechanisms in the plurality of fencing mechanisms are disposed on two adjacent walls in the two adjacent fencing mechanisms. The openings of the two adjacent fencing mechanisms are staggered from each other.

Based on the technical solutions disclosed in these embodiments, the openings of adjacent fencing mechanisms in the plurality of fencing mechanisms are staggered from each other. In this way, the high-temperature emissions of the battery cells, which are received by the first exhaust space formed by one fencing mechanism, are prevented from causing a wider range of impact and damage to the battery cells corresponding to other adjacent fencing mechanisms. In addition, the pressure of the first exhaust space is prevented from being overly high, and high safety performance of the battery is ensured.

In some possible embodiments, the first pressure relief mechanism is disposed on a first wall of the at least one battery cell. The first wall of the at least one battery cell is disposed opposite to a first box wall of the box. The fencing mechanism is disposed between the first box wall and the first wall of the at least one battery cell.

Based on the technical solutions disclosed in these embodiments, it is convenient to dispose and mount the fencing mechanism between the first box wall and the first wall of the at least one battery cell, and it is convenient for the fencing mechanism to enclose a space corresponding to the first pressure relief mechanism of the at least one battery cell to form the first exhaust space.

In some possible embodiments, the fencing mechanism is attached to the first box wall and the first wall of the at least one battery cell. The second pressure relief mechanism is disposed on a box wall other than the first box wall in the box.

Based on the technical solutions disclosed in these embodiments, it is convenient to mount the fencing mechanism in the box stably, and it is convenient for the fencing mechanism to guide the direction of the emissions of the at least one battery cell, thereby prolonging the exhaust path of the emissions inside the box, and enhancing the safety performance of the battery.

In some possible embodiments, a second box wall of the box intersects the first box wall of the box. The second pressure relief mechanism is disposed on the second box wall. A second exhaust space is formed between the fencing mechanism and the second box wall. The second exhaust space communicates with the first exhaust space through the opening. The emissions enter the second exhaust space through the opening and are expelled to the second pressure relief mechanism.

Based on the technical solutions disclosed in these embodiments, the first exhaust space and the second exhaust space are partitioned off inside the box by the fencing mechanism. The second exhaust space communicates with the second box wall of the box. In this way, it is convenient to design the position of the second pressure relief mechanism on the second box wall of the box, thereby further prolonging the exhaust path of the emissions inside the box, and ensuring high safety performance of the battery.

In some possible embodiments, the at least one battery cell is arranged to form a cell sequence. Two electrode terminals are disposed on the first wall of each battery cell in the cell sequence. The first pressure relief mechanism is disposed between the two electrode terminals. The fencing mechanism is disposed between the two electrode terminals of each battery cell in the cell sequence.

Based on the technical solutions disclosed in these embodiments, on the one hand, the fencing mechanism is close to the first pressure relief mechanism. Therefore, the fencing mechanism can well baffle and guide the emissions expelled from the first pressure relief mechanism. On the other hand, the fencing mechanism can prevent the electrode terminals or other components of the battery cell from being impacted by the emissions expelled from the first pressure relief mechanism, thereby further ensuring high safety performance of the battery.

In some possible embodiments, a separation component is disposed between the first box wall and the first wall of the at least one battery cell. The separation component is configured to form an electrical cavity and an exhaust cavity isolated from each other inside the box. The electrical cavity is configured to accommodate the at least one battery cell. The emissions of the at least one battery cell are expelled into the exhaust cavity through the separation component. The fencing mechanism is disposed in the exhaust cavity. The fencing mechanism is attached to the separation component and the first box wall. The fencing mechanism is configured to close in to form the first exhaust space in the exhaust cavity, where the first exhaust space corresponds to the first pressure relief mechanism of the at least one battery cell.

Based on the technical solutions disclosed in these embodiments of this application, the box is partitioned by the separation component into an electrical cavity and an exhaust cavity isolated from each other. Therefore, the emissions of the battery cell in the electrical cavity are expelled into the exhaust cavity through the separation component first, without directly impacting the electrical structure of the battery cell in the electrical cavity, thereby further improving the safety performance of the battery. Further, the fencing mechanism is disposed in the exhaust cavity, and is configured to guide the emissions. In this way, the emissions can be expelled through only the opening in the fencing mechanism, thereby prolonging the exhaust path of the emissions inside the box, and further improving the safety performance of the battery.

In some possible embodiments, the second pressure relief mechanism is disposed on a box wall corresponding to the exhaust cavity in the box.

Based on the technical solutions disclosed in these embodiments of this application, it is convenient to expel the emissions from the exhaust cavity, without impacting the electrical structure in the electrical cavity.

In some possible embodiments, the second pressure relief mechanism is disposed on a box wall different from the first box wall in the box.

Based on the technical solutions disclosed in these embodiments of this application, the second pressure relief mechanism is disposed on a box wall other than the first box wall, thereby prolonging the exhaust path of the emissions inside the box, and improving the safety of the battery.

In some possible embodiments, a pressure relief region corresponding to the first pressure relief mechanism of the at least one battery cell is formed in the separation component. The emissions of the at least one battery cell are expelled into the exhaust cavity through the pressure relief region. The fencing mechanism is configured to close in to form, in the exhaust cavity, the first exhaust space corresponding to the pressure relief region.

Based on the technical solutions disclosed in these embodiments, a pressure relief region is disposed in the separation component, thereby more effectively allowing the emissions expelled from the first pressure relief mechanism to pass, and preventing the emissions from impacting the electrical component in the electrical cavity. The fencing mechanism encloses the space corresponding to the pressure relief region, thereby indirectly enclosing the space corresponding to the first pressure relief mechanism of the battery cell, and in turn, effectively guiding the emissions and comprehensively ensuring high safety performance of the battery.

In some possible embodiments, the separation component is a thermal management component, and the thermal management component is configured to regulate temperature of the battery cell.

Based on the technical solutions disclosed in these embodiments, the thermal management component is versatilely used as a separation component, thereby partitioning off an electrical cavity and an exhaust cavity isolated from each other in the box to ensure high safety of the battery. In addition, due to presence of the thermal management component, the battery cell can be further thermally managed to further enhance the safety performance of the battery.

In some possible embodiments, a first filter hole is formed in the fencing mechanism. The first filter hole is configured to filter out solid particles in the emissions.

Based on the technical solutions disclosed in these embodiments, the first filter hole created in the fencing mechanism is primarily configured to allow the gas in the emissions to pass. The solid particles of a large size in the emissions can be filtered out by the first filter hole. The solid particles are unable to be expelled out of the first exhaust space through the first filter hole. Therefore, this technical solution can reduce the high-temperature solid particles expelled to the second pressure relief mechanism, thereby further enhancing the safety of the battery. Further, the first filter hole created in the fencing mechanism can increase the exhaust speed and the pressure relief speed of the first exhaust space, and prevent overpressure of the first exhaust space. At the same time, in a case that a plurality of first filter holes are created, the airflow expelled from the plurality of first filter holes can collide with each other to produce a turbulent flow, thereby reducing the hazards generated by the straight rushing gas.

In some possible embodiments, the fencing mechanism is a discrete structure. The fencing mechanism is formed by a plurality of fencing portions. A clearance between two adjacent fencing portions among the plurality of fencing portions forms the first filter hole.

Based on the technical solutions disclosed in these embodiments, on the basis of forming the first filter hole, the discrete design of the fencing mechanism increases the processing convenience. The fencing mechanism does not need to be molded in one piece, but a plurality of fencing sub-structures can be manufactured separately to form the fencing mechanism.

In some possible embodiments, a diameter D of the first filter hole and a volumetric energy density E of the battery cell satisfy the following relationship: $0.0001 \text{ mm/(Wh/L)} \leq D/E \leq 0.006 \text{ mm/(Wh/L)}$, where D is in units of mm, and E is in units of Wh/L.

Based on the technical solutions disclosed in these embodiments, the size of the first filter hole may be designed based on the volumetric energy density of the battery cell. In this way, the first filter hole is made adaptable to the scenario of thermal runaway of the battery cell, and well filters out the solid particles in the fencing mechanism, thereby comprehensively enhancing the safety performance of the battery.

In some possible embodiments, a melting point of a material of the fencing mechanism is not lower than 200°C.

Based on the technical solutions disclosed in these embodiments, the fencing mechanism can withstand the impact of high-temperature emissions expelled from the battery cell, prevent the high-temperature emissions from impairing the reliability of the fencing mechanism in use, and comprehensively ensure high safety performance of the battery.

In some possible embodiments, at least one box wall of the box is a hollow box wall. The second pressure relief mechanism is disposed on an outer surface of the hollow box wall. An exhaust port is disposed on an inner surface of the hollow box wall. An internal space between the inner surface and the outer surface of the hollow box wall forms at least a part of the exhaust passage.

Based on the technical solutions disclosed in these embodiments, an exhaust passage for the emissions can be formed by using the hollow box wall of the box, thereby saving the internal space of the box and increasing the energy density of the battery.

In some possible embodiments, at least two box walls of the box are hollow box walls, and the exhaust port and the second pressure relief mechanism are disposed on different hollow box walls; or the exhaust port and the second pressure relief mechanism are disposed on the same hollow box wall, and the exhaust port and the second pressure relief mechanism are staggered from each other.

Based on the technical solutions disclosed in these embodiments, the exhaust port and the second pressure relief mechanism are disposed in different hollow box walls of the box, or, the exhaust port and the second pressure relief mechanism disposed on the same hollow box wall are staggered from each other, thereby prolonging the exhaust path of the emissions of the battery cell inside the box wall of the box, and in turn, reducing the temperature of the emissions arriving at the second pressure relief mechanism, and enhancing the safety performance of the battery.

In some possible embodiments, at least one box wall of the box is a hollow box wall. The second pressure relief mechanism is disposed on an outer surface of the hollow box wall. The battery further includes a hollow crossbeam. An exhaust port is disposed on the hollow crossbeam and/or an inner surface of the hollow box wall. An internal space of the hollow crossbeam communicates with an internal space of the hollow box wall. The internal space of the hollow crossbeam and the internal space of the hollow box wall form at least a part of the exhaust passage.

In the technical solutions disclosed in these embodiments, a part of the exhaust passage for the emissions may be formed by using the internal spaces of the hollow box wall and/or hollow crossbeam of the box, thereby not only saving the internal space of the box and increasing the energy density of the battery, but also further prolonging the exhaust path of the emissions inside the box and enhancing the safety performance of the battery.

In some possible embodiments, when the number of the at least one battery cell is plural, the plurality of battery cells include multiple groups of battery cells. The hollow crossbeam is configured to divide an internal space of the box into a plurality of subspaces. The plurality of subspaces are configured to accommodate the multiple groups of battery cells respectively. On the hollow crossbeam, the exhaust port is disposed corresponding to each of the plurality of subspaces; and/or on the inner surface of the hollow box wall, the exhaust port is disposed corresponding to each of the plurality of subspaces.

Based on the technical solutions disclosed in these embodiments, when the hollow crossbeam divides the internal space of the box into a plurality of subspaces, it is convenient to reduce or even prevent the battery cell accommodated in each subspace from impacting the battery cells accommodated in other subspaces, thereby enhancing the safety performance of the battery. Further, to ensure that the emissions of the battery cell accommodated in each subspace can be expelled smoothly, an exhaust port is disposed on the hollow crossbeam and/or the inner surface of the hollow box wall, thereby further enhancing the safety performance of the battery.

In some possible embodiments, the battery further includes a separation component. The separation component is configured to form an electrical cavity and an exhaust cavity isolated from each other in an internal space of the box. The electrical cavity is configured to accommodate the at least one battery cell. The exhaust cavity is configured to receive the emissions from the at least one battery cell and form at least a part of the exhaust passage. The hollow crossbeam is located in the electrical cavity and connected to the separation component. The exhaust port is disposed at a junction between the hollow crossbeam and the separation component. The exhaust port is configured to receive the emissions from the exhaust cavity.

Based on the technical solutions disclosed in these embodiments, the box is partitioned by the separation component into an electrical cavity and an exhaust cavity isolated from each other. Therefore, the emissions of the battery cell in the electrical cavity are expelled into the exhaust cavity through the separation component, without impacting the electrical structure of the battery cell in the electrical cavity, thereby improving the safety performance of the battery. Further, the internal spaces of the hollow crossbeam and the hollow box wall in the electrical cavity also serve as an exhaust passage for the emissions, thereby further prolonging the exhaust path of the emissions inside the box, and enhancing the safety performance of the battery.

In some possible embodiments, the battery further includes a fencing mechanism. The fencing mechanism is disposed in the exhaust cavity. A pressure relief region corresponding to the first pressure relief mechanism of the at least one battery cell is formed in the separation component. The emissions of the at least one battery cell are expelled into the exhaust cavity through the pressure relief region. The fencing mechanism is configured to close in to form, in the exhaust cavity, a first exhaust space corresponding to the pressure relief region. An opening communicating with the first exhaust space is created on the fencing mechanism. The first exhaust space is configured to form at least a part of the exhaust passage.

Based on the technical solutions disclosed in these embodiments, the fencing mechanism is disposed in the exhaust cavity, and can further guide the path of the emissions expelled into the exhaust cavity, thereby further prolonging the exhaust path of the emissions inside the box, and enhancing the safety performance of the battery.

In some possible embodiments, a second filter hole is created on the inner surface of the hollow box wall and/or on a hollow crossbeam. The second filter hole is configured to filter out solid particles in the emissions.

Based on the technical solutions disclosed in these embodiments, the second filter hole is created on the inner surface of the hollow box wall and/or on the hollow crossbeam to filter out the solid particles in the emissions, thereby reducing the high-temperature solid particles expelled to the second pressure relief mechanism and further enhancing the safety of the battery.

In some possible embodiments, at least one of a filter component, a gas absorption component, or a cooling component is disposed in the exhaust passage.

Based on the technical solutions disclosed in these embodiments, at least one of the filter component, the gas absorption component, or the cooling component is disposed in the exhaust path, thereby further reducing the hazards of the emissions expelled out of the box, and enhancing the safety performance of the battery.

In some possible embodiments, the filter component includes a third filter hole or a bent airflow channel. The third filter hole or the bent airflow channel is configured to filter out solid particles in the emissions.

Based on the technical solutions disclosed in these embodiments, the third filter hole or the bent airflow channel is easy to implement and can effectively filter out the solid particles.

In some possible embodiments, the gas absorption component is formed by a gas absorption material. The gas absorption material is configured to absorb a combustible gas in the emissions.

Based on the technical solutions disclosed in these embodiments, the gas absorption component is easy to implement, and can absorb the combustible gas in the emissions and prevent the combustible gas from causing a safety hazard to the battery.

In some possible embodiments, the cooling component is formed by a heat absorption material. The heat absorption material is configured to absorb heat of the emissions to cool the emissions.

Based on the technical solutions disclosed in these embodiments, the cooling component is easy to implement, and absorbs heat and cools the emissions to further reduce the temperature of the emissions expelled out of the box, thereby improving the safety performance of the battery.

In some possible embodiments, a maximum temperature $T1$ of the emissions at the first pressure relief mechanism and a maximum temperature $T2$ of the emissions at the second pressure relief mechanism satisfy the following relationship: $T1 - T2 \geq 300\ °C$.

Based on the technical solutions disclosed in these embodiments, after the emissions of the battery cell expelled through the first pressure relief mechanism travel a relatively long exhaust path inside the box, the temperature of the emissions arriving at the second pressure relief mechanism is much lower than that at the first pressure relief mechanism, thereby preventing safety hazards caused by the emissions expelled out of the battery.

In some possible embodiments, the maximum temperature of the emissions at the second pressure relief mechanism satisfies: $T2 \leq 300\ °C$.

Based on the technical solutions disclosed in these embodiments, after the emissions of the battery cell expelled through the first pressure relief mechanism travel a relatively long exhaust path inside the box, the temperature of the emissions arriving at the second pressure relief mechanism is relatively low, thereby more reliably preventing safety hazards caused by the emissions expelled out of the battery, and ensuring high safety performance of the battery.

According to a second aspect, an electrical device is provided. The electrical device includes the battery according to the first aspect or any one possible embodiment of the first aspect. The battery is configured to provide electrical energy.

Based on the technical solution of an embodiment of this application, an exhaust passage is formed between the first pressure relief mechanism of at least one battery cell and the second pressure relief mechanism of the box. The exhaust passage disposed inside the box causes the minimum length of the exhaust path of the emissions of the at least one battery cell in the exhaust passage to fall within a range of 0.1 m to 10 m, thereby preventing an overly short exhaust path that causes overtemperature of the emissions expelled from the box, and also preventing an overly long exhaust path that makes the emissions accumulate in the box and generate a high pressure causing severe damage to the hermeticity of the box. Therefore, this technical solution can control both the temperature of the emissions out of the box and the pressure generated by the emissions inside the box, thereby comprehensively ensuring high safety performance and sealing performance of the battery.

## BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.

FIG. 1 is a schematic structural diagram of a vehicle according to an embodiment of this application;
FIG. 2 is a schematic structural diagram of a battery according to an embodiment of this application;
FIG. 3 is a schematic structural diagram of a battery cell according to an embodiment of this application;

FIG. 4 is a schematic structural diagram of a battery according to an embodiment of this application;

FIG. 5 is another schematic structural diagram of a battery according to an embodiment of this application;

FIG. 6 shows two other schematic structural diagrams of a battery 10 according to an embodiment of this application;

FIG. 7 is another schematic structural diagram of a battery according to an embodiment of this application;

FIG. 8 is a schematic exploded view of a battery according to an embodiment of this application;

FIG. 9 is a schematic top view of the battery shown in FIG. 8;

FIG. 10 is another schematic exploded view of a battery according to an embodiment of this application;

FIG. 11 is a schematic top view of the battery shown in FIG. 10;

FIG. 12 is another schematic exploded view of a battery according to an embodiment of this application;

FIG. 13 is a schematic bottom view of the battery shown in FIG. 12;

FIG. 14 shows two schematic structural diagrams of a fencing mechanism that encloses a pressure relief region according to an embodiment of this application;

FIG. 15 shows two other schematic structural diagrams of a battery according to an embodiment of this application;

FIG. 16 is another schematic structural diagram of a battery according to an embodiment of this application;

FIG. 17 is another schematic structural diagram of a battery according to an embodiment of this application;

FIG. 18 shows three other schematic structural diagrams of a battery according to an embodiment of this application;

FIG. 19 is another schematic exploded view of a battery according to an embodiment of this application;

FIG. 20 is another schematic exploded view of a battery according to an embodiment of this application;

FIG. 21 is a schematic bottom view of the battery shown in FIG. 20 and a cross-sectional schematic view of the battery sectioned along an A-A' direction;

FIG. 22 is another schematic exploded view of a battery according to an embodiment of this application; and

FIG. 23 is a schematic bottom view of the battery shown in FIG. 22.

The drawings are not drawn to scale.

## DETAILED DESCRIPTION OF EMBODIMENTS

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

In the description of this application, unless otherwise specified, "a plurality of" means at least two in number; the terms such as "up", "down", "left", "right", "in", and "out" indicating a direction or a position relationship are merely intended for ease or brevity of description of this application, but do not indicate or imply that the mentioned device or component is necessarily located in the specified direction and position or constructed or operated in the specified direction and position. Therefore, such terms are not to be understood as a limitation on this application.

In this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first", "second", and "third" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that an embodiment described in this application may be combined with another embodiment.

In the field of new energy, batteries are evidently essential as a main power source for electrical devices such as an electric vehicle, watercraft, or spacecraft. In this application, a battery means a unitary physical module that includes one or more battery cells to provide a higher voltage and a higher capacity. A battery typically includes a box configured to package one or more battery cells. The box prevents liquid or other foreign matters from affecting the charging or discharging of the battery cells. Optionally, the battery mentioned herein may be referred to as a battery pack.

Optionally, a battery cell may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell may be in various shapes such as cylindrical, flat, cuboidal or other shapes. The shape of the battery cell is not limited herein. Depending on the form of packaging, the battery cell is typically classed into three types: cylindrical battery cell, prismatic battery cell, and pouch-type battery cell, without being limited in embodiments of this application.

The development of the battery technology needs to allow for a plurality of design factors, including performance parameters such as energy density, cycle life, discharge capacity, charge rate, and discharge rate, and also needs to ensure safety of the battery.

For a battery, main safety hazards come from a charging process and a discharging process. To improve safety performance of the battery, a pressure relief mechanism is usually disposed for the battery cell. The pressure relief mechanism means an element or component that is actuated to relieve an internal pressure or temperature when the internal pressure or temperature of a battery cell reaches a preset threshold. The preset threshold may be adjusted depending on design requirements. The preset threshold may depend on the material of one or more of the positive electrode plate, the negative electrode plate, the electrolyte solution, or the separator in the battery cell. The pressure relief mechanism may be an element or component sensitive to pressure or temperature, for example. To be specific, when the internal pressure or temperature of the battery cell reaches the preset threshold, the pressure relief mechanism is actuated to form a channel for relieving the internal pressure or temperature. When the pressure relief mechanism is actuated, high-temperature and high-pressure substances inside the battery cell are expelled as emissions out of the pressure relief mechanism. In this way, the pressure of the battery cell is relieved under a circumstance of a controllable pressure or temperature to avoid potential severer accidents. The emissions of the battery cell include but are not limited to: reaction-induced high-temperature and high-pressure gases, electrolyte solution, melted or split positive and negative electrode plates, fragments of the separator, flames, and the like.

However, when the energy density of the battery system increases, the temperature, speed, and solid particles percentage of the emissions of the battery cell increase significantly. If the movement and path of the emissions are not designed pertinently, the emissions expelled out of the box are very prone to catch fire when meeting oxygen, thereby resulting in a great safety hazard.

In view of the above situation, this application provides a battery, including: at least one battery cell, including a first pressure relief mechanism; and a box configured to accommodate the at least one battery cell. The box includes a second pressure relief mechanism. An exhaust passage is formed between the first pressure relief mechanism of the at least one battery cell and the second pressure relief mechanism of the box. When the first pressure relief mechanism is actuated, the exhaust passage is configured to expel emissions of the at least one battery cell from the first pressure relief mechanism to the second pressure relief mechanism. A minimum length of an exhaust path of the emissions in the exhaust passage is 0.1 m to 10 m.

Based on this technical solution, an exhaust passage is formed between the first pressure relief mechanism of at least one battery cell and the second pressure relief mechanism of the box. The exhaust passage disposed inside the box causes the minimum length of the exhaust path of the emissions of the at least one battery cell in the exhaust passage to fall within the range of 0.1 m to 10 m, thereby preventing an overly short exhaust path that causes overtemperature of the emissions expelled from the box, and also preventing an overly long exhaust path that makes the emissions accumulate in the box and generate a high pressure causing severe damage to the hermeticity of the box. Therefore, this technical solution can control both the temperature of the emissions out of the box and the pressure generated by the emissions inside the box, thereby comprehensively ensuring high safety performance and sealing performance of the battery.

All technical solutions described in embodiments of this application are applicable to various battery-powered devices such as an electric power cart, an electric tool, an electric vehicle, a watercraft, and a spacecraft. The spacecraft includes an airplane, a rocket, a space shuttle, a spaceship, and the like.

Understandably, the technical solutions described in the embodiments of this application are not only applicable to the devices mentioned above, but also applicable to all battery-powered devices. However, for brevity, the following embodiments are described by using an electric vehicle as an example.

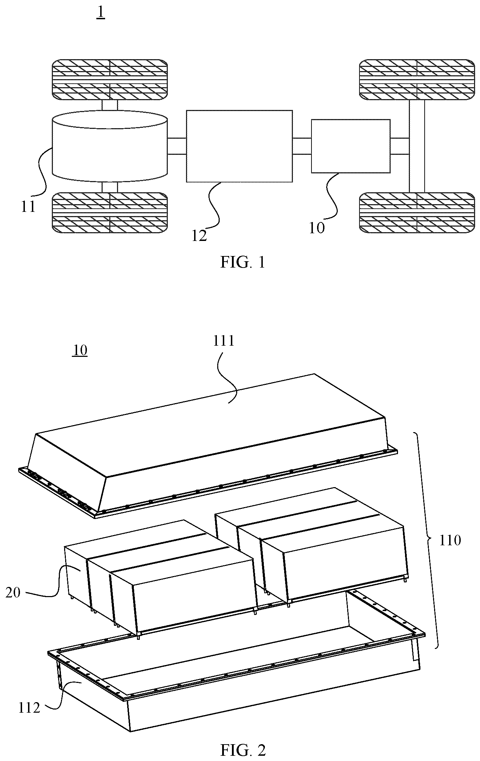

For example, as shown in FIG. 1, which is a schematic structural diagram of a vehicle 1 according to an embodiment of this application, the vehicle 1 may be an oil-fueled vehicle, a natural gas vehicle, or a new energy vehicle. The new energy vehicle may be a battery electric vehicle, a hybrid electric vehicle, a range-extended electric vehicle, or the like. A motor 11, a controller 12, and a battery 10 may be disposed inside the vehicle 1. The controller 12 is configured to control the battery 10 to supply power to the motor 11. For example, the battery 10 may be disposed at the bottom, front, or rear of the vehicle 1. The battery 10 may be configured to supply power to the vehicle 1. For example, the battery 10 may serve as an operating power supply of the vehicle 1 to power a circuit system of the vehicle 1. For example, the battery may be configured to meet operating power usage requirements of the vehicle 1 that is being started or navigated or running. In another embodiment of this application, the battery 10 serves not only as an operating power supply of the vehicle 1, but may also serve as a driving power supply of the vehicle 1 to provide driving power for the vehicle 1 in place of or partly in place of fuel oil or natural gas.

To meet different power usage requirements, the battery may include a plurality of battery cells. The plurality of battery cells may be connected in series, parallel, or series-and-parallel pattern. The series-and-parallel pattern means a combination of series connection and parallel connection. The battery may also be referred to as a battery pack. Optionally, the plurality of battery cells may be connected in series, parallel, or series-and-parallel pattern to form a battery module, and then a plurality of battery modules may be connected in series, parallel, or series-and-parallel pattern to form the battery. In other words, the plurality of battery cells may directly form the battery, or form the battery modules that are then used to form the battery.

For example, as shown in FIG. 2, which is a schematic structural diagram of a battery 10 according to an embodiment of this application, the battery 10 may include a plurality of battery cells 20. The battery 10 may further include a box 110 (or referred to as a container). The box 110 is hollowed out inside. A plurality of battery cells 20 are accommodated in the box 110. As shown in FIG. 2, the box 110 may include two parts, herein referred to as a first part 111 and a second part 112 respectively. The first part 111 and the second part 112 are snap-fitted together. The shapes of the first part 111 and the second part 112 may depend on the shape of a plurality of battery cells 20 combined. An opening may be created on both the first part 111 and the second part 112. For example, the first part 111 and the second part 112 each may be a hollow cuboid, and each may include one opened surface. The opening of the first part 111 is opposite to the opening of the second part 112. The first part 111 and the second part 112 are snap-fitted to each other to form a box 110 that includes a closed cavity. The plurality of battery cells 20 are combined and connected in parallel, series, or series-and-parallel pattern, and then placed into the box 110 that is formed by snap-fitting the first part 111 and the second part 112.

Optionally, the battery 10 may further include other structures, details of which are omitted here. For example, the battery 10 may further include a busbar component. The busbar component is configured to implement electrical connection between the plurality of battery cells 20, such as parallel connection, series connection, or series-parallel connection. Specifically, the busbar component may implement the electrical connection between the battery cells 20 by connecting electrode terminals of the battery cells 20. Further, the busbar component may be fixed to the electrode terminals of the battery cells 20 by welding. Electrical energy of the plurality of battery cells 20 may be further led out by a conductive mechanism running through the box. Optionally, the conductive mechanism may also belong to the busbar component.

Depending on different power requirements, the number of battery cells 20 may be set to any value. A plurality of battery cells 20 may be connected in series, parallel, or series-and-parallel pattern to achieve a relatively high capacity or power. Each battery 10 may include a relatively large number of battery cells 20. Therefore, in order to facilitate mounting, the battery cells 20 may be arranged in groups. Each group of battery cells 20 forms a battery module. The number of battery cells 20 included in the battery module is not limited, and may be set as required.

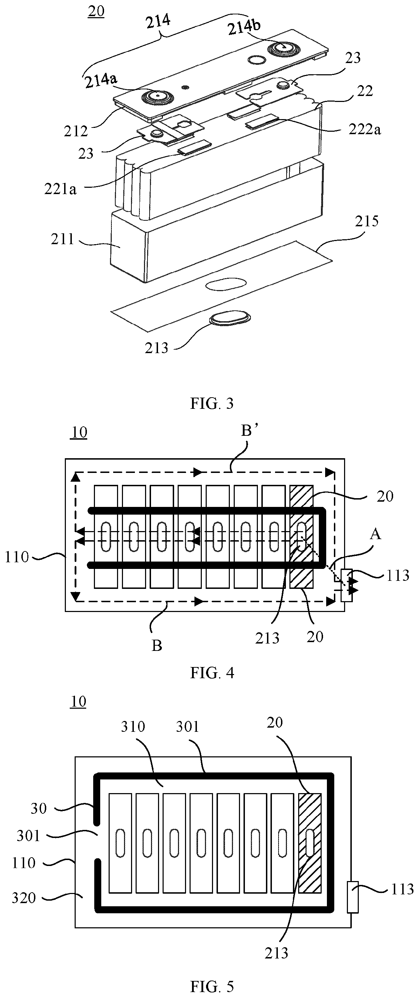

As shown in FIG. 3, which is a schematic structural diagram of a battery cell 20 according to an embodiment of this application, the battery cell 20 includes one or more electrode assemblies 22, a housing 211, and a cover plate 212. The walls of the housing 211 and the cover plate 212 are all referred to as walls of the battery cell 20. The shape of the housing 211 is determined depending on the shape of a combination of one or more electrode assemblies 22. For example, the housing 211 may be a hollow cuboid or cube or cylinder. One surface of the housing 211 is provided with an opening through which one or more electrode assemblies 22 can be placed into the housing 211 conveniently. The cover plate 212 covers the opening and is connected to the housing 211 to form a closed cavity that is configured to accommodate the electrode assembly 22. The housing 211 is filled with an electrolyte such as an electrolyte solution.

The battery cell 20 may further include two electrode terminals 214. The two electrode terminals 214 may be disposed on the cover plate 212. The cover plate 212 is generally in the shape of a flat plate, and the two electrode terminals 214 are fixed on a flat surface of the cover plate 212. The two electrode terminals 214 are a positive electrode terminal 214a and a negative electrode terminal 214b respectively. A connection component 23, also referred to as a current collection component 23, is disposed corresponding to each electrode terminal 214, located between the cover plate 212 and the electrode assembly 22, and configured to electrically connect the electrode assembly 22 and the electrode terminal 214.

As shown in FIG. 3, each electrode assembly 22 includes a first tab 221a and a second tab 222a of opposite polarities. For example, when the first tab 221a is a positive tab, the second tab 222a is a negative tab. The first tabs 221a of one or more electrode assemblies 22 are connected to one electrode terminal by one connecting member 23. The second tabs 222a of one or more electrode assemblies 22 are connected to another electrode terminal by another connecting member 23.

As an example, a first pressure relief mechanism 213 may be further disposed on one wall of the battery cell 20. The first pressure relief mechanism 213 is configured to be actuated to relieve an internal pressure or temperature when the internal pressure or temperature of the battery cell 20 reaches a threshold.

Optionally, in an embodiment of this application, the first pressure relief mechanism 213 and the electrode terminal 214 are disposed on different walls of the battery cell 20. As an example, as shown in FIG. 3, the electrode terminal 214 of the battery cell 20 may be disposed on the top wall of the battery cell 20, that is, on the cover plate 212. The first pressure relief mechanism 213 is disposed on another wall different from the top wall of the battery cell 20. For example, the first pressure relief mechanism 213 is disposed on a bottom wall 215 opposite to the top wall.

Optionally, in another embodiment of this application, the first pressure relief mechanism 213 and the electrode terminal 214 are disposed on the same wall of the battery cell 20. As an example, both the electrode terminal 214 and the first pressure relief mechanism 213 may be disposed on the top wall of the battery cell 20, that is, on the cover plate 212.

The first pressure relief mechanism 213 may be a part of the wall on which the pressure relief mechanism is located. Alternatively, the pressure relief mechanism may be a discrete structure independent of the wall on which the pressure relief mechanism is located, and may be fixed onto the wall by means such as welding. For example, in the embodiment shown in FIG. 3, when the first pressure relief mechanism 213 is a part of the bottom wall 215, the first pressure relief mechanism 213 may be formed by creating a nick on the bottom wall 215. The thickness of the bottom wall 215 corresponding to the nick is less than the thickness of the remaining region other than the nick on the first pressure relief mechanism 213. In addition, the first pressure relief mechanism 213 may be any one of various possible pressure relief structures. The specific form of the first pressure relief mechanism is not limited herein. For example, the first pressure relief mechanism 213 may be a temperature-sensitive pressure relief mechanism. The temperature-sensitive pressure relief mechanism is configured to melt when the internal temperature of the battery cell 20 equipped with the first pressure relief mechanism 213 reaches a threshold; and/or, the first pressure relief mechanism 213 may be a pressure-sensitive pressure relief mechanism. The pressure-sensitive pressure relief mechanism is configured to rupture when the internal air pressure of the battery cell 20 equipped with the first pressure relief mechanism 213 reaches a threshold.

FIG. 4 shows a schematic structural diagram of a battery 10 according to an embodiment of this application. Optionally, FIG. 4 may be a top view, bottom view, or side view of the battery 10.

As shown in FIG. 4, the battery 10 includes at least one battery cell 20 and a box 110. The at least one battery cell 20 includes a first pressure relief mechanism 213. The box 110 is configured to accommodate the at least one battery cell 20, and includes a second pressure relief mechanism 113. An exhaust passage is formed between the first pressure relief mechanism 213 of the at least one battery cell 20 and the second pressure relief mechanism 113 of the box 110. The exhaust passage is configured to expel emissions of the at least one battery cell 20 from the first pressure relief mechanism 213 to the second pressure relief mechanism 113. A minimum length of an exhaust path of the emissions in the exhaust passage is 0.1 m to 10 m.

Specifically, in the battery 10 in this embodiment of this application, the first pressure relief mechanism 213 in the battery cell 20 may be located on the same wall of the battery cell 20 as the electrode terminal 214 of the battery cell 20, as shown in FIG. 3. Alternatively, the first pressure relief mechanism 213 may be located on a different wall of the battery cell 20 than the electrode terminal 214. Specifically, for the relevant technical solutions of the battery cell 20 and the first pressure relief mechanism 213, reference may be made to the above description about the embodiment shown in FIG. 3, details of which are omitted here.

The box 110 is configured to accommodate the at least one battery cell 20. The specific shape of the box 110 is adaptable to the overall shape of the at least one battery cell 20. Optionally, the box 110 may be a rectangular box containing a first part 111 and a second part 112, as described above in the embodiment shown in FIG. 2, and is configured to accommodate the at least one rectangular battery cell 20. For the relevant technical solutions of the box 110, reference may be made to the above description about the embodiment shown in FIG. 2, details of which are omitted here.

A second pressure relief mechanism 113 may be disposed on the box wall of the box 110. The second pressure relief mechanism 113 may communicate with the internal space of the box 110. Therefore, the second pressure relief mechanism may be configured to expel the emissions of the battery cell 20, which are already expelled into the internal space of the box 110, out of the box 110, so as to ensure high safety performance of the battery 10.

Optionally, similar to the pressure relief principle of the first pressure relief mechanism 213. The second pressure relief mechanism 113 may be a temperature-sensitive pressure relief mechanism or a pressure-sensitive pressure relief structure, intended to actuate the second pressure relief mechanism 113 when the internal temperature and/or pressure of the box 110 is greater than a preset threshold. The gas inside the box 110 may be expelled out of the box 110 through the second pressure relief mechanism 113. The specific implementation of the second pressure relief mechanism 113 is not limited herein.

Still referring to FIG. 4, in the battery 10, an exhaust passage may be formed between the first pressure relief mechanism 213 of each battery cell 20 among the at least one battery cell 20 and the second pressure relief mechanism 113 of the box. The exhaust passage is configured to guide the emissions of the at least one battery cell 20, and guide the emissions from the first pressure relief mechanism 213 of the at least one battery cell 20 to the second pressure relief mechanism 113. The emissions move in the exhaust passage to form an exhaust path.

As an example but not limitation, a structural component (the black structural component in the drawing) configured to guide the emissions may be disposed inside the battery 10 shown in FIG. 4. The structural component may be disposed with reference to the first pressure relief mechanism 213 of the battery cell 20. In this way, an exhaust passage is formed inside the box 110 to guide the direction and path of the emissions expelled from the first pressure relief mechanism 213.

Optionally, in this embodiment of this application, a plurality of exhaust paths of the emissions may exist between the first pressure relief mechanism 213 and the second pressure relief mechanism 113. The minimum length of the plurality of exhaust paths may be calculated based on the dimensions of the relevant structural components in the battery 10, the box 110, and other components as well as the relative position between the first pressure relief mechanism 213 and the second pressure relief mechanism 113.

As an example, two exhaust paths for the emissions of a battery cell 20 (the battery cell 20 shaded in the drawing) among the at least one battery cell 20 are shown by dashed arrows in FIG. 4, where the emissions are expelled from the first pressure relief mechanism 213 to the second pressure relief mechanism 113. After the emissions are expelled from the opening of the black structural component, the downward-expelling exhaust path is a first exhaust path, and the upwardexpelling exhaust path is a second exhaust path. The length B' of the second exhaust path is greater than the length B of the first exhaust path. Optionally, the length B of the first exhaust path may be a minimum length B of the exhaust path of the emissions between the first pressure relief mechanism 213 and the second pressure relief mechanism 113. The minimum length B is 0.1 m to 10 m.

In this embodiment of this application, in a case that the battery 10 includes a plurality of battery cells 20 that each contain the first pressure relief mechanism 213, the minimum length of the exhaust path of the emissions of each battery cell 20 among the plurality of battery cells 20 between the first pressure relief mechanism 213 and the second pressure relief mechanism 113 is 0.1 m to 10 m.

It is hereby noted that the temperature of the emissions of the battery cell 20 is relatively high when expelled from the first pressure relief mechanism 213. The longer the exhaust path of the emissions inside the box 110, the lower the temperature of the emissions at the second pressure relief mechanism 113. However, the longer the exhaust path of the emissions inside the box 110, the larger the amount of emissions accumulated inside the box 110. This results in a relatively high pressure inside the box 110, leads to bulges, or even impairs the hermeticity of the box 110 or even causes an explosion.

Table 1 below shows experimental data about the minimum length B of an exhaust path, the maximum temperature of the emissions at the second pressure relief mechanism 113, and the status of the box 110.

**Table 1**

| B (m) | Box status | Maximum temperature of emissions at second pressure relief mechanism (°C) |
|---|---|---|
| 0.05 | Flames | 691 |
| 0.1 | Ejecting a few sparks | 576 |
| 0.3 | Normal | 502 |
| 2 | Normal | 289 |
| 5 | Normal | 135 |
| 7 | Bulging | 77 |
| 9 | Bulging | 63 |
| 10 | Bulging | 59 |
| 11 | Sealing failure | 56 |

As can be seen from the above table, in a case that the minimum length B of the exhaust path is less than 0.1 m, the temperature of the emissions expelled from the interior of the box 110 is relatively high, and may cause a severe fire hazard. In a case that the minimum length B of the exhaust path is 0.1 m, only a small amount of sparks are ejected from the box 110, with hazards being slighter and controllable. When the minimum length B of the exhaust path falls within the range of 0.3 m to 5 m, the box 110 stays in a normal state. When the minimum length B of the exhaust path is greater than 5 m and less than or equal to 10 m, the box 110 bulges, and the hermeticity of the box 110 is impaired to some extent, but the battery 10 still remains usable. In a case that the minimum length B of the exhaust path is greater than 10 m, the hermeticity of the box 110 is damaged drastically. In this case, severe hazards such as explosion or even fire may be caused to the box 110.

To sum up, based on the technical solution of this embodiment of this application, an exhaust passage is formed between the first pressure relief mechanism 213 of at least one battery cell 20 and the second pressure relief mechanism 113 of the box 110. The exhaust passage disposed inside the box 110 causes the minimum length of the exhaust path of the emissions of the at least one battery cell 20 in the exhaust passage to fall within a range of 0.1 m to 10 m, thereby preventing an overly short exhaust path that causes overtemperature of the emissions expelled from the box 110, and also preventing an overly long exhaust path that makes the emissions accumulate in the box 110 and generate a high pressure causing severe damage to the hermeticity of the box 110. Therefore, this technical solution can control both the temperature of the emissions out of the box 110 and the pressure generated by the emissions inside the box 110, thereby comprehensively ensuring high safety performance and sealing performance of the battery.

In some possible embodiments, the minimum length of the exhaust path is 0.3 m to 5 m.

As can be seen from Table 1 above, in the case that the minimum length of the exhaust path is 0.3 m to 5 m, the box 110 can keep in a normal state without incurring abnormal phenomena, thereby reliably ensuring high overall safety performance of the battery 10.

In some possible embodiments, the minimum length of the exhaust path is greater than a shortest distance between the first pressure relief mechanism 213 and the second pressure relief mechanism 113.

Optionally, as indicated by the short dashed line segment shown in FIG. 4, the shortest distance A between the first pressure relief mechanism 213 and the second pressure relief mechanism 113 may be the length of a connection line from the center of the first pressure relief mechanism 213 to the center of the second pressure relief mechanism 113.

Based on the technical solutions disclosed in these embodiments, the emissions do not travel the shortest distance between the first pressure relief mechanism 213 and the second pressure relief mechanism 113 to exit out of the box 110, but travel a relatively long exhaust path inside the box 110. This technical solution reduces the temperature of the emissions inside the box 110, thereby further enhancing safety performance of the battery 10.

In some possible embodiments, the minimum length B of the exhaust path and a volumetric energy density E of the battery cell 20 satisfy the following relationship: $0.0001 \text{ m/(Wh/L)} \leq B/E \leq 0.01 \text{ m/(Wh/L)}$, where B is in units of m, and E is in units of Wh/L.

In these embodiments, the minimum length of the exhaust path correlates with the volumetric energy density of the battery cell 20. Specifically, the higher the volumetric energy density of the battery cell 20, the longer the minimum length of the exhaust path. When the volumetric energy density of the battery cell 20 is higher, the temperature of the emissions expelled through the first pressure relief mechanism 213 of the battery cell 20 that is thermally runaway may be higher. By prolonging the exhaust passage inside the box 110, the high-temperature emissions can be sufficiently cooled down inside the box 110.

In addition, in these embodiments, the volumetric energy density of the battery cell 20 and the minimum length of the exhaust path need to satisfy a specified proportional relationship. Specifically, when the volumetric energy density of the battery cell 20 is constant, the ratio of the minimum length of the exhaust path to the volumetric energy density of the battery cell 20 is greater than or equal to 0.0001 m/(Wh/L), thereby ensuring a sufficient length of the exhaust path, and in turn, cooling the emissions of the battery cell 20 inside the box 110 sufficiently. Further, when the volumetric energy density of the battery cell 20 is constant, the ratio of the length of the exhaust path to the volumetric energy density of the battery cell 20 is less than or equal to 0.01 m/(Wh/L). This technical solution prevents an overly long exhaust passage inside the box 110, and in turn, prevents an excessive amount of emissions from accumulating inside the box 110 and resulting in overpressure inside the box 110.

As an example, Table 2 below shows experimental data about the ratio of the minimum length B of the exhaust path to the volumetric energy density E of the battery cell 20, the maximum temperature of the emissions at the second pressure relief mechanism 113, and the status of the box 110.

**Table 2**

| B (m) | E (Wh/L) | B/E (m/(Wh/L)) | Box status | Maximum temperature of emissions at second pressure relief mechanism (°C) |
|---|---|---|---|---|
| 0.08 | 1000 | 0.00008 | Flames | 1202 |
| 0.1 | 1000 | 0.0001 | Ejecting a few sparks | 1125 |
| 0.2 | 1000 | 0.0002 | Normal | 990 |
| 2 | 1000 | 0.002 | Normal | 621 |
| 5 | 1000 | 0.005 | Normal | 300 |
| 8 | 1000 | 0.008 | Bulging | 185 |
| 12 | 1000 | 0.012 | Sealing failure | 134 |
| 0.08 | 700 | 0.00011 | Ejecting a few sparks | 1050 |
| 0.1 | 700 | 0.00014 | Ejecting a few sparks | 946 |
| 0.2 | 700 | 0.00029 | Normal | 865 |
| 2 | 700 | 0.0029 | Normal | 510 |
| 5 | 700 | 0.0071 | Bulging | 254 |
| 8 | 700 | 0.011 | Sealing failure | 154 |

(continued)

| B (m) | E (Wh/L) | B/E (m/(Wh/L)) | Box status | Maximum temperature of emissions at second pressure relief mechanism (°C) |
|---|---|---|---|---|
| 0.08 | 500 | 0.00016 | Ejecting a few sparks | 601 |
| 0.1 | 500 | 0.0002 | Normal | 576 |
| 0.2 | 500 | 0.0004 | Normal | 525 |
| 2 | 500 | 0.004 | Normal | 289 |
| 5 | 500 | 0.01 | Bulging | 135 |
| 8 | 500 | 0.016 | Sealing failure | 68 |

As can be seen from Table 2 above, when the ratio of the minimum length B of the exhaust path to the volumetric energy density E of the battery cell 20 is less than 0.0001 m/(Wh/L) or greater than 0.01 m/(Wh/L), the box 110 may incur phenomena such as flames or a sealing failure, thereby posing severe safety hazards to the battery 10.

When the ratio of the minimum length B of the exhaust path to the volumetric energy density E of the battery cell 20 is greater than or equal to 0.0001 m/(Wh/L) and less than or equal to 0.01 m/(Wh/L), the box 110 is in a normal state or just incurs phenomena such as a small amount of sparks ejected and bulges. The phenomena such as small amount of sparks and bulges are less hazardous to the battery 10, and the battery 10 is still usable.

In some embodiments, the minimum length B of the exhaust path and the volumetric energy density E of the battery cell 20 may satisfy the following relationship: 0.0002 m/(Wh/L) ≤ B/E ≤ 0.005 m/(Wh/L). Referring to the table above, in such embodiments, the box 110 can keep in a normal state reliably. In this case, the overall performance of the battery 10 is good, and both the safety performance and the sealing performance of the battery are ensured to be superior.

In some embodiments, the minimum length B of the exhaust path, the shortest distance A between the first pressure relief mechanism 213 and the second pressure relief mechanism 113, and the volumetric energy density E of the battery cell 20 satisfy the following relationship: 0.0015 L/Wh ≤ (B/A)/E ≤ 0.08 L/Wh, where A and B are in units of m, and E is in units of Wh/L.

In these embodiments, the ratio of the minimum length of the exhaust path to the shortest distance between the two pressure relief mechanisms (the first pressure relief mechanism 213 and the second pressure relief mechanism 113) correlates with the volumetric energy density of the battery cell 20. Optionally, the higher the volumetric energy density of the battery cell 20, the higher the ratio of the minimum length of the exhaust path to the shortest distance between the two pressure relief mechanisms. When the shortest distance between the two pressure relief mechanisms is constant, the minimum length of the exhaust path can be made longer by designing the interior of the box 110 pertinently. Specifically, when the volumetric energy density of the battery cell 20 is higher, the temperature of the emissions expelled through the first pressure relief mechanism 213 of the battery cell 20 that is thermally runaway may be higher. By prolonging the exhaust path inside the box 110, the high-temperature emissions can be sufficiently cooled down inside the box 110.

In addition, in these embodiments, the ratio of the minimum length of the exhaust path to the shortest distance between the two pressure relief mechanisms needs to satisfy a specified proportional relationship with the volumetric energy density of the battery cell 20. Specifically, when the volumetric energy density of the battery cell 20 is constant, the ratio of the minimum length of the exhaust path to the shortest distance between the two pressure relief mechanisms, divided by the volumetric energy density of the battery cell 20, is set to be greater than or equal to 0.0015 L/Wh, thereby ensuring a sufficient length of the exhaust path, and in turn, cooling the emissions of the battery cell 20 inside the box 110 sufficiently. Further, when the volumetric energy density of the battery cell 20 is constant, the ratio of the minimum length of the exhaust path to the shortest distance between the two pressure relief mechanisms, divided by the volumetric energy density of the battery cell 20, is less than or equal to 0.08 L/Wh. This technical solution prevents an overly long exhaust passage inside the box 110, and in turn, prevents an excessive amount of emissions from accumulating inside the box 110 and resulting in overpressure inside the box 110.

Based on the technical solutions disclosed in these embodiments, the design of the minimum length of the exhaust path not only considers the volumetric energy density of the battery cell 20, but also considers the shortest distance between the two pressure relief mechanisms (the first pressure relief mechanism 213 and the second pressure relief mechanism 113), thereby comprehensively ensuring the design of the minimum length of the exhaust path to be adaptable in the battery 10, and in turn, well enhancing the performance metrics such as safety and sealing performance of the battery.

As an example, Table 3 below shows experimental data about the ratio of the minimum length B of the exhaust path to the shortest distance A between the two pressure relief mechanisms, the ratio of "the ratio of the minimum length B of the exhaust path to the shortest distance A between the two pressure relief mechanisms" to the volumetric energy density of the battery cell 20, the maximum temperature of the emissions at the second pressure relief mechanism 113, and the status of the box 110.

**Table 3**

| B/A | E (Wh/L) | (B/A)/E (L/Wh) | Box status | Maximum temperature of emissions at second pressure relief mechanism (°C) |
|---|---|---|---|---|
| 1 | 1000 | 0.001 | Flames | 1334 |
| 1.5 | 1000 | 0.0015 | Ejecting a few sparks | 1125 |
| 20 | 1000 | 0.02 | Ejecting a few sparks | 758 |
| 40 | 1000 | 0.04 | Normal | 551 |
| 80 | 1000 | 0.08 | Bulging | 291 |
| 100 | 1000 | 0.1 | Sealing failure | 238 |
| 1 | 700 | 0.0014 | Flames | 1161 |
| 1.5 | 700 | 0.0021 | Ejecting a few sparks | 946 |
| 20 | 700 | 0.029 | Normal | 641 |
| 40 | 700 | 0.057 | Bulging | 453 |
| 80 | 700 | 0.11 | Sealing failure | 243 |
| 1 | 500 | 0.002 | Ejecting a few sparks | 644 |
| 1.5 | 500 | 0.003 | Normal | 576 |
| 20 | 500 | 0.04 | Normal | 373 |
| 40 | 500 | 0.08 | Bulging | 255 |
| 60 | 500 | 0.12 | Sealing failure | 186 |

As can be seen from Table 3 above, when (B/A)/E is less than 0.0015 L/Wh or greater than 0.08 L/Wh, the box 110 may incur phenomena such as flames or a sealing failure, thereby posing severe safety hazards to the battery 10.

When (B/A)/E is greater than or equal to 0.0015 L/Wh and less than or equal to 0.08 L/Wh, the box 110 is in a normal state or just incurs phenomena such as a small amount of sparks ejected and bulges. The phenomena such as small amount of sparks and bulges are less hazardous to the battery 10, and the battery 10 is still usable.

In some embodiments, the minimum length B of the exhaust path, the shortest distance A between the first pressure relief mechanism 213 and the second pressure relief mechanism 113, and the volumetric energy density E of the battery cell 20 satisfy the following relationship: 0.003 L/Wh ≤ (B/A)/E ≤ 0.04 L/Wh. Referring to Table 3 above, in such embodiments, the box 110 can keep in a normal state reliably. In this case, the overall performance of the battery 10 is good, and both the safety performance and the sealing performance of the battery are ensured to be superior.

In the preceding embodiment, the design of the minimum length of the exhaust path in this application is described. The following describes the design of the structure of the exhaust passage inside the box 110 according to this application with reference to FIG. 5 to FIG. 23.

FIG. 5 shows another schematic structural diagram of a battery 10 according to an embodiment of this application. Optionally, similar to FIG. 4 described above, FIG. 5 may be a top view, bottom view, or side view of the battery 10.

As shown in FIG. 5, in this embodiment of this application, the battery 10 further includes: a fencing mechanism 30, configured to close in to form a first exhaust space 310 corresponding to the first pressure relief mechanism 213 of the at least one battery cell 20. An opening 301 communicating with the first exhaust space 310 is created on the fencing mechanism 30. The first exhaust space 310 is configured to form at least a part of the exhaust passage.

Optionally, the black structural component in the embodiment shown in FIG. 4 above may be the fencing mechanism 30 in this embodiment of this application.

Optionally, the first exhaust space 310 formed by enclosure by the fencing mechanism 30 may include a space toward which the first pressure relief mechanism 213 of the at least one battery cell 20 is oriented. An opening 301 is created on the fencing mechanism 30. Therefore, the fencing mechanism 30 does not implement fully-closed enclosure, but provides a vent for the first exhaust space 310 at the opening 301.

Optionally, the fencing mechanism 30 may be a frame-type structure with an opening 301. As an example, as shown in FIG. 4, the fencing mechanism 30 may be a rectangular frame-type structure, or, in an alternative embodiment, the fencing mechanism 30 may be a frame-type structure of other shapes such as a circular frame-type structure or a polygonal frame-type structure. The shape of the frame-type structure is not particularly limited herein.

Optionally, as shown in FIG. 5, the fencing mechanism 30 may be a rectangular frame-type structure, or, in an alternative embodiment, the fencing mechanism 30 may be a frame-type structure of other shapes such as a circular frame-type structure or a polygonal frame-type structure. The shape of the frame-type structure is not particularly limited herein.

Optionally, as shown in FIG. 5, on the basis that the fencing mechanism 30 closes in to form the first exhaust space 310 corresponding to the first pressure relief mechanism 213 of the at least one battery cell 20, a clearance may be left between the fencing mechanism 30 and the box wall of the box 110. Therefore, a second exhaust space 320 may be formed between the fencing mechanism 30 and the box wall of the box 110. The second exhaust space 320 is connected to the first exhaust space 310 through the opening 301. The emissions of the at least one battery cell 20 are expelled to the second exhaust space 320 through the opening 301, and then expelled to the second pressure relief mechanism 113 through the second exhaust space 320. In other words, in this embodiment, the first exhaust space 310 formed by the fencing mechanism 30 by enclosing the first pressure relief mechanism 213 may be configured to form a part of the exhaust passage. The second exhaust space 320 formed between the fencing mechanism 30 and the box wall of the box 110 may be configured to form the other part of the exhaust passage.

Based on the technical solution disclosed in this embodiment of this application, a fencing mechanism 30 is disposed inside the box 110 of the battery 10. The fencing mechanism 30 can form an effective exhaust passage inside the box 110. Through pertinent design for the fencing mechanism 30, the length of the exhaust passage and the minimum length of the exhaust path in the exhaust passage can be controlled effectively, so as to meet the safety requirements and performance requirements of the battery 10.

In some embodiments, the opening 301 in the fencing mechanism 30 may be located at a position in the fencing mechanism 30, the position being away from the second pressure relief mechanism 113.

Understandably, the fencing mechanism 30 may be formed by creating an opening 301 on the closed frame-type structure. The closed frame-type structure may be formed by splicing a plurality of fencing portions arranged along the enclosure direction. The plurality of fencing portions are of the same shape and size. Each fencing portion is at a specified distance from the second pressure relief mechanism 113. An average of a plurality of distances from the plurality of fencing portions to the second pressure relief mechanism 113 is a. Among the plurality of fencing portions, if the distance from a fencing portion to the second pressure relief mechanism 113 is greater than a, then the position of the fencing portion may be understood to be a position, away from the second pressure relief mechanism 113, in the fencing mechanism 30. Therefore, an opening 301 may be created at the position of the fencing portion.

Based on the technical solutions disclosed in these embodiments of this application, the opening 301 is located at a position away from the second pressure relief mechanism 113 in the fencing mechanism 30, thereby making the distance relatively long between the opening 301 and the second pressure relief mechanism 113, thereby further prolonging the exhaust path of the emissions of the battery cell 20 inside the box 110 of the battery 10, further reducing the temperature of the emissions arriving at the second pressure relief mechanism 113, and enhancing the safety performance of the battery 10.

In some possible embodiments, the opening 301 in the fencing mechanism 30 may be oriented toward a box wall in the box 110, the box wall being different from a box wall on which the second pressure relief mechanism 113 is located.

As an example, as shown in FIG. 5, one second pressure relief mechanism 113 is disposed on one box wall in the box 110. The opening 301 in the fencing mechanism 30 may be oriented toward a box wall that, in the box 110, is adjacent to the box wall on which the second pressure relief mechanism 113 is located. Alternatively, in some other embodiments, the opening 301 may be oriented toward a box wall in the box 110, the box wall being opposite to the box wall on which the second pressure relief mechanism 113 is located. In the technical solution in this example, the orientation of the opening 301 is away from or even back from the second pressure relief mechanism 113. Therefore, this technical solution can increase the distance between the opening 301 and the second pressure relief mechanism 113, thereby further prolonging the exhaust path of the emissions of the battery cell 20 inside the box 110 of the battery 10.

In other examples, a plurality of second pressure relief mechanisms 113 may be disposed in the box 110. For example, the second pressure relief mechanisms 113 may be disposed on two opposite box walls in the box 110. Therefore, the opening 301 of the fencing mechanism 30 may be oriented toward a box wall different from the two opposite box walls in the box 110.

Illustratively, the number of openings 301 in FIG. 5 is 1. In other alternative embodiments, the number of openings 301 may be plural. All the plurality of openings 301 are oriented toward a box wall in the box 110, the box wall being different from a box wall on which the second pressure relief mechanism 113 is located.

Based on the technical solutions disclosed in these embodiments of this application, the opening 301 of the fencing mechanism 30 may be designed appropriately based on the arrangement of the second pressure relief mechanism 113 of the box 110, thereby preventing the opening 301 from being oriented toward the box wall on which the second pressure relief mechanism 113 is located, and increasing the distance between the opening 301 and the second pressure relief mechanism 113. This further prolongs the exhaust path of the emissions of the battery cell 20 inside the box 110 of the battery 10, further reduces the temperature of the emissions arriving at the second pressure relief mechanism 113, and enhances the safety performance of the battery 10.

In the above embodiment shown in FIG. 5, the battery 10 may include just one fencing mechanism 30, thereby making it convenient to mount the fencing mechanism 30 in the box 110. In some other embodiments, the battery 10 may include a plurality of fencing mechanisms 30. The plurality of fencing mechanisms 30 are spaced apart.

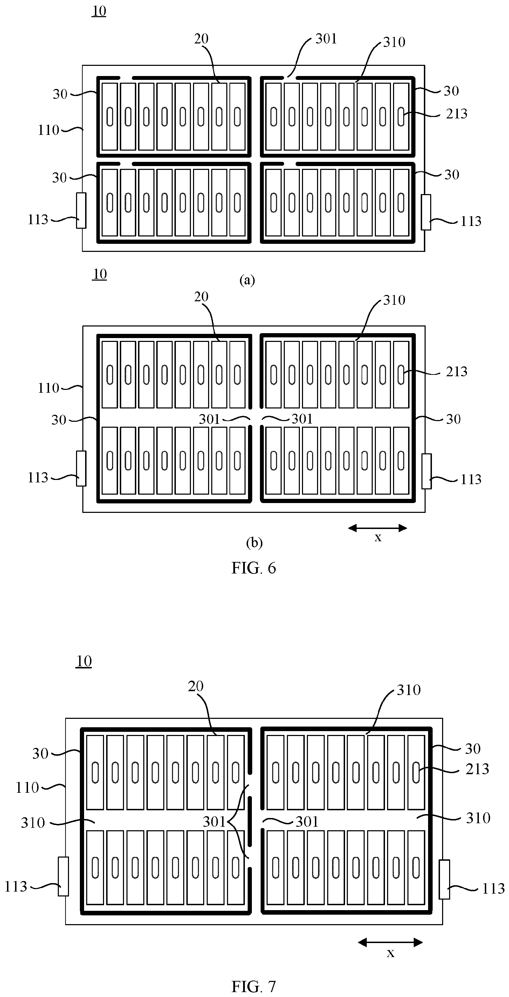

In this case, FIG. 6 shows two other schematic structural diagrams of a battery 10 according to an embodiment of this application. Similar to FIG. 5 described above, optionally, FIG. 6 may be a top view, bottom view, or side view of the battery 10.

As shown in subfigure (a) in FIG. 6, the plurality of battery cells 20 in the battery 10 may include 4 groups of battery cells 20. The battery 10 may include 4 fencing mechanisms 30 corresponding to the 4 groups of battery cells 20. Each fencing mechanism 30 is configured to form a first exhaust space 310 corresponding to the first pressure relief mechanism 213 of one group of battery cells 20.

In addition, in the battery 10, the second pressure relief mechanism 113 is disposed on two opposite box walls in the box 110. In this case, the opening 301 of each fencing mechanism 30 may be oriented toward a box wall in the box 110, the box wall being different from two box walls on which the second pressure relief mechanism 113 is located.

Optionally, as shown in subfigure (a) in FIG. 6, the relative positions of the openings 301 of the 4 fencing mechanisms 30 in the 4 fencing mechanisms 30 are identical, and the orientations of the 4 openings 301 may also be identical. Alternatively, in other alternative embodiments, the relative positions of the openings 301 of the 4 fencing mechanisms 30 in the 4 fencing mechanisms 30 may be different, and the orientations of some openings 301 in the 4 openings 301 may be different.

Based on the technical solutions disclosed in embodiments of this application, a plurality of fencing mechanisms 30 are disposed in the box 110 of the battery 10. The plurality of fencing mechanisms 30 may be flexibly disposed and adjusted according to actual needs, so as to more conveniently guide the emissions of the battery cells 20 at different positions in the box 110, and further enhance the overall safety performance of the battery 10.

In some embodiments, the opening 301 of the fencing mechanism 30 may be located in a middle region of the box 110.

As shown in subfigure (b) in FIG. 6, the plurality of battery cells 20 in the battery 10 may include 2 groups of battery cells 20. The battery 10 may include 2 fencing mechanisms 30 corresponding to the 2 groups of battery cells 20. Optionally, in the battery 10, the second pressure relief mechanism 113 is disposed on two opposite walls in the box 110. In this case, the opening 301 of each fencing mechanism 30 may be located in the middle region of the box 110.

Optionally, the two walls on which the second pressure relief mechanism 113 is located may be two walls of the box 110 arranged opposite to each other in the x-direction. In a case that the box 110 is a rectangular box, the x-direction may be a length direction, a width direction, or a height direction of the box 110. In this case, the opening 301 of each fencing mechanism 30 may be located in the middle region of the box 110 in the x-direction.

Based on the technical solution disclosed in above embodiment, the opening 301 of the fencing mechanism 30 is located in the middle region of the box 110, thereby also increasing the distance between the opening 301 and the second pressure relief mechanism 113 located on the box wall of the box 110, and in turn, prolonging the exhaust path of the emissions of the battery cell 20 inside the box 110 of the battery 10, further reducing the temperature of the emissions arriving at the second pressure relief mechanism 113, and enhancing the safety performance of the battery 10.

FIG. 7 shows another schematic structural diagram of a battery 10 according to an embodiment of this application.

As shown in FIG. 7, openings of two adjacent fencing mechanisms 30 in the plurality of fencing mechanisms 30 are disposed on two adjacent walls in the two adjacent fencing mechanisms 30. The openings 301 of the two adjacent fencing mechanisms 30 are staggered from each other.

As an example, in the two adjacent fencing mechanisms 30 shown in FIG. 7, one opening 301 is created on one of the fencing mechanisms 30, and two openings 301 are created on the other fencing mechanism 30. The three openings 301 are staggered from each other to prevent a direct convection flow from being formed between the two first exhaust spaces 310 enclosed by the two fencing mechanisms 30.

In this embodiment of this application, the openings 301 of the two adjacent fencing mechanisms 30 are not directly opposite to each other, but are staggered from each other. In this way, the emissions expelled from the opening 301 of the first fencing mechanism 30 are prevented from directly entering, through the opening 301 of the second fencing mechanism 30, the first exhaust space 310 formed by the second fencing mechanism 30, thereby preventing the high-temperature emissions from causing a wider range of impact and damage, and also preventing overpressure inside the box 110, and ensuring high safety performance of the battery 10.

It is hereby noted that, in the above embodiments shown in FIG. 4 to FIG. 7, the number of fencing mechanisms 30 and the number of battery cells 20 enclosed in each fencing mechanism 30 are just illustrative but not restrictive. The number of fencing mechanisms 30 and the enclosure manner depend on the number and arrangement manner of battery cells 20 in the battery 10, and are not particularly limited herein.

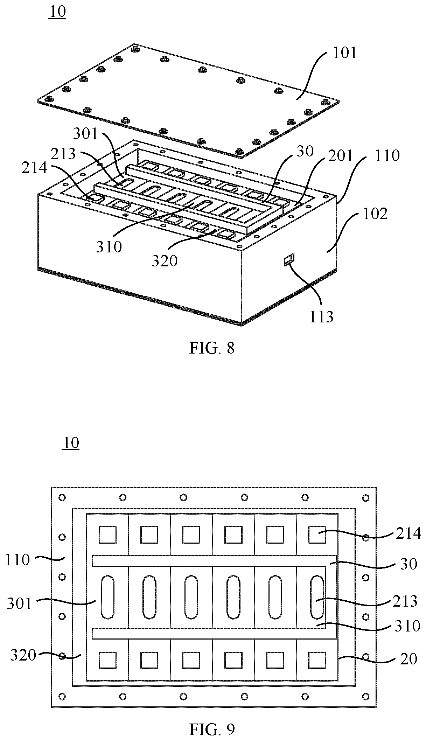

FIG. 8 shows a schematic exploded view of a battery 10 according to an embodiment of this application.

As shown in FIG. 8, the first pressure relief mechanism 213 is disposed on a first wall 201 of the at least one battery cell 20. The first wall 201 of the at least one battery cell 20 is disposed opposite to a first box wall 101 of the box 110. The fencing mechanism 30 is disposed between the first box wall 101 and the first wall 201 of the at least one battery cell 20.

In this embodiment, the first walls 201 of the at least one battery cell 20 may be located in the same plane. This setting makes it convenient to dispose and mount the fencing mechanism 30 between the first box wall 101 and the first wall 201 of the at least one battery cell 20, and makes it convenient to enclose a space corresponding to the first pressure relief mechanism 213 of the at least one battery cell 20 to form the first exhaust space 310.

Optionally, as shown in FIG. 8, the fencing mechanism 30 is attached to the first box wall 101 of the box 110 and the first wall 201 of the at least one battery cell 20. The second pressure relief mechanism 113 is disposed on a wall other than the first box wall 101 in the box 110.

As an example, the box 110 shown in FIG. 8 may be a cuboidal hollow box containing 6 planar box walls. The first box wall 101 of the box 110 is disposed opposite to the first wall 201 of the battery cell 20. The first box wall 101 of the box 110 is parallel to the first wall 201 of the battery cell 20. The fencing mechanism 30 may be directly attached between the first box wall 101 and the first wall 201 of the battery cell 20, or, the fencing mechanism 30 may be indirectly attached between the first box wall 101 and the first wall 201 of the battery cell 20 (for example, by means of an adhesive layer or a fixing piece). The second pressure relief mechanism 113 is not disposed on the first box wall 101, and the second pressure relief mechanism 113 may be disposed on any box wall other than the first box wall 101.

The first exhaust space 310 formed by enclosure by the fencing mechanism 30 between the first box wall 101 and the first wall 201 of the battery cell 20 is a sealed space in a first direction perpendicular to the first wall 201 of the battery cell 20, but is an opened space in a second direction parallel to the first wall 201 of the battery cell 20. Because the second pressure relief mechanism 113 is disposed on a box wall other than the first box wall 101, the emissions expelled by the battery cell 20 through the first pressure relief mechanism 213 are unable to be expelled through the first box wall 101 in the first direction, but move along the second direction and are expelled through the opening of the first exhaust space 310 in the second direction and the second pressure relief mechanism 113 located on other box walls.

Based on the technical solution disclosed in this embodiment of this application, it is convenient to mount the fencing mechanism 30 in the box 110 stably, and it is convenient for the fencing mechanism 30 to guide the direction of the emissions of the at least one battery cell 20, thereby prolonging the exhaust path of the emissions inside the box 110, and enhancing the safety performance of the battery 10.

Optionally, in some embodiments, as shown in FIG. 8, a second box wall 102 of the box 110 intersects the first box wall 101 of the box 110. The second pressure relief mechanism 113 is disposed on the second box wall 102. A second exhaust space 320 is formed between the fencing mechanism 30 and the second box wall 102. The second exhaust space 320 is connected to the first exhaust space 310 through the opening 301. The emissions of the at least one battery cell 20 enter the second exhaust space 320 through the opening 301, and are then expelled to the second pressure relief mechanism 113.

Specifically, in the technical solution of this embodiment, the box 110 may contain 4 second box walls 102 intersecting the first box wall 101 of the box 110. For example, in a case that the first box wall 101 of the box 110 is a top wall or bottom wall of the box 110, the 4 second box walls 102 may be sidewalls of the box 110. The number of second pressure relief mechanisms 113 may be one or more. The one or more second pressure relief mechanisms 113 may be disposed on any one or more second box walls 102 among the 4 second box walls 102.

On the basis that the fencing mechanism 30 closes in to form a first exhaust space 310 between the first box wall 101 and the first wall 201 of the battery cell 20, a second exhaust space 320 may be formed between the fencing mechanism 30 and the second box wall 102. The second exhaust space 320 is configured to communicate the first exhaust space 310 with the second pressure relief mechanism 113 located on the second box wall 102.

In the technical solution of this embodiment, the first exhaust space 310 and the second exhaust space 320 are partitioned off inside the box 110 by the fencing mechanism 30. The second exhaust space 320 communicates with the second box wall 102 of the box 110. In this way, it is convenient to design the position of the second pressure relief mechanism 113 on the second box wall 102 of the box 110, thereby further prolonging the exhaust path of the emissions inside the box 110, and ensuring high safety performance of the battery 10.

Corresponding to the exploded view of the embodiment shown in FIG. 8, FIG. 9 shows a schematic top view of the battery 10 shown in FIG. 8.

Referring to FIG. 8 and FIG. 9, in some embodiments, the at least one battery cell 20 is arranged to form a cell sequence. Two electrode terminals 214 are disposed on the first wall 201 of each battery cell 20 in the cell sequence. The first pressure relief mechanism 213 is disposed between the two electrode terminals 214. The fencing mechanism 30 is disposed between the two electrode terminals 214 of each battery cell in the cell sequence.

As an example, in the embodiments shown in FIG. 8 and FIG. 9, a plurality of battery cells 20 are arranged in a row along the width direction of the battery cells 20. The row of battery cells 20 may be understood as a cell sequence. Alternatively, in other examples, a plurality of battery cells 20 may form a cell sequence in another arrangement manner. The arrangement manner of the battery cells 20 in the cell sequence is not particularly limited herein.

A first pressure relief mechanism 213 and two electrode terminals 214 are disposed on the first wall 201 of each battery cell 20 in the cell sequence. The fencing mechanism 30 is disposed near the first pressure relief mechanism 213 of each battery cell 20 in the cell sequence, and encloses a space corresponding to the first pressure relief mechanism 213. Further, the fencing mechanism 30 may be disposed between the two electrode terminals 214 of each battery cell 20 in the cell sequence.

Based on the technical solutions disclosed in these embodiments, on the one hand, the fencing mechanism 30 is close to the first pressure relief mechanism 213. Therefore, the fencing mechanism 30 can well baffle and guide the emissions expelled from the first pressure relief mechanism 213. On the other hand, the fencing mechanism 30 can prevent the electrode terminals 214 or other components of the battery cell 20 from being impacted by the emissions expelled from the first pressure relief mechanism 213, thereby further ensuring high safety performance of the battery 10.

Optionally, when the electrode terminals 214 of the battery cell 20 and the first pressure relief mechanism 213 are located on the same wall, in an alternative embodiment, the fencing mechanism 30 may simultaneously enclose the two electrode terminals 214 of the battery cell 20 and the space corresponding to the first pressure relief mechanism 213. Based on the technical solution of this embodiment, the fencing mechanism 30 can also serve the functions of baffling and guiding the emissions expelled by the first pressure relief mechanism 213 on the first wall 201, and prolong the exhaust path of the emissions inside the box 110.

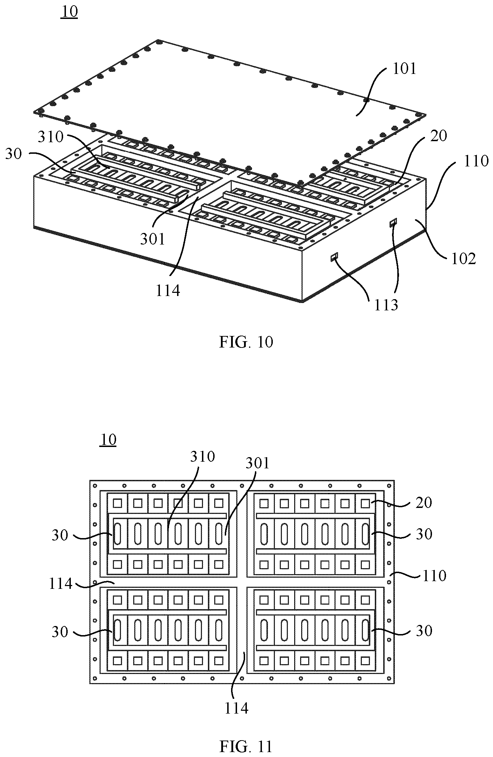

FIG. 8 and FIG. 9 described above show schematic structural diagrams of one fencing mechanism 30 according to an embodiment of this application. FIG. 10 and FIG. 11 below show schematic structural diagrams of a plurality of fencing mechanisms 30 according to another embodiment of this application. FIG. 10 is another schematic exploded view of a battery 10 according to an embodiment of this application, and FIG. 11 is a top view of the battery 10 shown in FIG. 10.

Referring to FIG. 10 and FIG. 11, in an embodiment of this application, the battery 10 may include multiple groups of battery cells 20. Each group of battery cells 20 may include a cell sequence formed by arranging at least one battery cell 20, as shown in FIG. 8 and FIG. 9. One fencing mechanism 30 encloses a space corresponding to the first pressure relief mechanism 213 of each group of battery cells 20.

Each fencing mechanism 30 among the plurality of fencing mechanisms 30 may be directly attached to the first box wall 101 of the box 110 and the first walls 201 of one group of battery cells 20. Specifically, for the relevant technical solutions of the fencing mechanism 30 and a group of battery cells 20, reference may be made to the above description about the embodiments shown in FIG. 8 and FIG. 9, details of which are omitted here.

Optionally, in some embodiments, a crossbeam 114 may be disposed in the box 110 of the battery 10. The crossbeam 114 may divide the internal space of the box 110 into a plurality of subspaces. Each subspace is configured to accommodate one group of battery cells 20. As an example, as shown in FIG. 10 and FIG. 11, two intersecting crossbeams 114 are disposed in the box 110. The two crossbeams 114 divide the internal space of the box 110 into four subspaces.

Optionally, in order to make it convenient to expel the emissions of the battery cell 20 in each subspace, a second pressure relief mechanism 113 may be disposed on the box wall corresponding to each subspace. For example, for the embodiment shown in FIG. 10, 2 second pressure relief mechanisms 113 may be disposed on each second box wall 102 among the two opposite second box walls 102 in the box 110. In this way, a total of 4 second pressure relief mechanisms 113 are disposed on the box walls of the box 110.

Optionally, as shown in FIG. 10 and FIG. 11, the openings 301 of a plurality of fencing mechanisms 30 may be located in the middle region of the box 110. Alternatively, in other embodiments, the openings 301 of the plurality of fencing mechanisms 30 may be oriented toward a box wall in the box 110, the box wall being different from a box wall on which the second pressure relief mechanism 113 is located.

In the above technical solution shown in FIG. 8 to FIG. 11, the fencing mechanism 30 is attached to the first box wall 101 of the box 110 and the first wall 201 of the at least one battery cell 20. In other embodiments different from the above technical solution, another component may be disposed between the first box wall 101 of the box 110 and the first wall 201 of the at least one battery cell 20, and the fencing mechanism 30 may be attached between this component and the first wall 201 of the at least one battery cell 20.

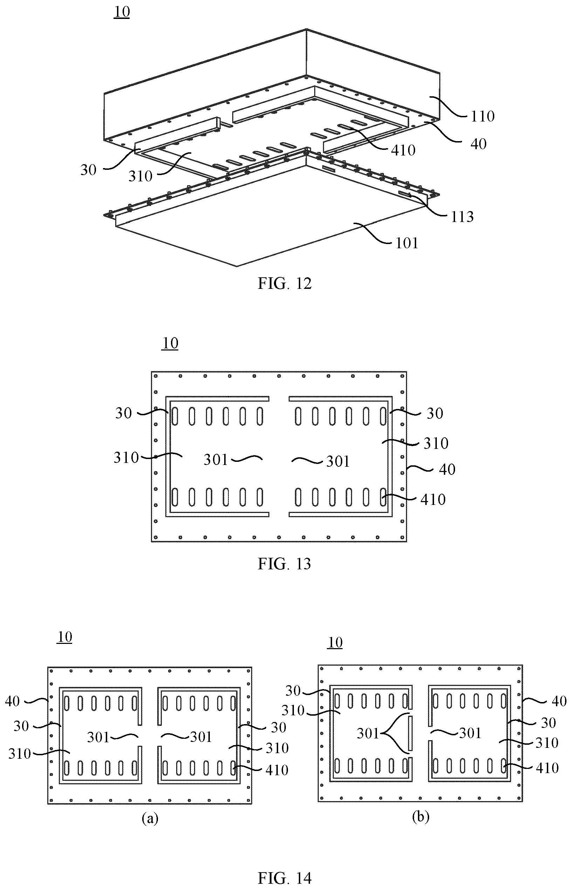

FIG. 12 shows another schematic exploded view of a battery 10 according to an embodiment of this application.

As shown in FIG. 12, in this embodiment of this application, a separation component 40 is disposed between the first box wall 101 of the box 110 and the first wall 201 (not shown in the drawing) of the at least one battery cell 20. The separation component 40 is configured to form an electrical cavity and an exhaust cavity isolated from each other inside the box 110. The electrical cavity is configured to accommodate the at least one battery cell 20 (not shown in the drawing). The fencing mechanism 30 is disposed in the exhaust cavity. The fencing mechanism 30 is attached to the first box wall 101 of the box 110 and the separation component 40. The fencing mechanism 40 is configured to close in to form the first exhaust space 310 in the exhaust cavity, where the first exhaust space corresponds to the first pressure relief mechanism 213 (not shown in the drawing) of the at least one battery cell 20.

Specifically, in the technical solution of this embodiment, the separation component 40 separates the internal space of the box 110 into an electrical cavity and an exhaust cavity. In other words, inside the box 110, the electrical cavity that accommodates the at least one battery cell 20 is separated from the exhaust cavity that collects and expels the emissions of the at least one battery cell 20. In this way, when the battery cell 20 is abnormal, the emissions of the battery cell 20 enter the exhaust cavity first. The emissions does not directly impact the electrical components in the electrical cavity, thereby further enhancing the safety of the battery.

Optionally, in some embodiments, the separation component 40 may include a wall shared by the electrical cavity and the exhaust cavity. For example, the separation component 40 may be a wall of the electrical cavity and a wall of the exhaust cavity concurrently. In this way, the emissions of the battery cell 20 may directly enter the exhaust cavity through the separation component 40, thereby avoiding the need to fit the box 110 with other structural components that may impair the performance parameters such as energy density of the battery 10.

Further, the fencing mechanism 30 is disposed in the exhaust cavity and attached to the first box wall 101 of the box 110 and the separation component 40. The fencing mechanism 30 forms a first exhaust space 310 between the first box wall 101 and the separation component 40 to receive and guide the emissions in the box 110.

Based on the technical solutions disclosed in these embodiments of this application, the box 110 is partitioned by the separation component 40 into an electrical cavity and an exhaust cavity isolated from each other. Therefore, the emissions of the battery cell 20 in the electrical cavity are expelled into the exhaust cavity through the separation component 40 first, without directly impacting the electrical structure of the battery cell 20 in the electrical cavity, thereby further improving the safety performance of the battery 10. Further, the fencing mechanism 30 is disposed in the exhaust cavity, and is configured to guide the emissions. In this way, the emissions can be expelled through only the opening 301 in the fencing mechanism 30, thereby prolonging the exhaust path of the emissions inside the box 110, and further improving the safety performance of the battery 10.

Optionally, the second pressure relief mechanism 113 may be disposed on any one of the box walls of the box 110. With reference to the specific position of the second pressure relief mechanism 113, an exhaust passage communicating with the second pressure relief mechanism 113 and the first exhaust space 310 may be disposed inside the box 110.

For example, the second pressure relief mechanism 113 may be disposed on a box wall corresponding to the electrical cavity in the box 110. In this case, a channel communicating with the electrical cavity and the first exhaust space 310 may be disposed in the separation component 40 to prolong the exhaust path of the emissions inside the box 110.

Alternatively, the second pressure relief mechanism 113 may be disposed on a box wall corresponding to the exhaust cavity in the box 110, thereby making it convenient to expel the emissions from the exhaust cavity, without impacting the electrical structure in the electrical cavity.

Optionally, the second pressure relief mechanism 113 may be disposed on a box wall different from the first box wall 101 in the box 110.

Specifically, in these embodiments of this application, the first box wall 101 and the separation component 40 may be configured to form two walls opposite to each other in the exhaust cavity. After the emissions of the battery cell 20 pass through the separation component 40, a majority of the emissions rush straight toward the first box wall 101. Therefore, the second pressure relief mechanism 113 is disposed on a box wall other than the first box wall 101, thereby prolonging the exhaust path of the emissions inside the box 110, and improving the safety of the battery 10.

Optionally, in some embodiments, after the battery 10 is mounted in an electrical device, the first box wall 101 of the battery 10 may be a bottom wall of the box 110, and the first wall 201 on which the first pressure relief mechanism 213 is disposed in at least one battery cell 20 may also be referred to as a bottom wall of the at least one battery cell 20. The separation component 40 may separate the internal space of the box 110 into two spaces, in which the electrical cavity is located below the exhaust cavity. Alternatively, in some other alternative embodiments, the electrical cavity may be located above the exhaust cavity or in some other directions. The relative positional relationship between the electrical cavity and the exhaust cavity is not particularly limited herein.

Optionally, still referring to FIG. 12, In some embodiments, a pressure relief region 410 corresponding to the first pressure relief mechanism 213 of the at least one battery cell 20 is formed in the separation component 40. The emissions of the at least one battery cell 20 are expelled into the exhaust cavity through the pressure relief region 410. The fencing mechanism 30 is configured to close in to form, in the exhaust cavity, the first exhaust space 310 corresponding to the pressure relief region 410.

Optionally, at least one pressure relief region 410 is disposed in the separation component 40. Each pressure relief region may be disposed opposite to the first pressure relief mechanism 213 of one battery cell 20. When the first pressure relief mechanism 213 is actuated, the emissions inside the battery cell 20 are expelled through the pressure relief region 410.

In some embodiments, the pressure relief region 410 in the separation component 40 may be specially treated so as to be more easily broken upon actuation of the first pressure relief mechanism 213. As an example, the pressure relief region 410 may be a fragile region. The strength of the fragile region is less than the strength of regions other than the pressure relief region 410 in the separation component 40.

Optionally, a groove opposite to the first pressure relief mechanism 213 is disposed on the separation component 40. The bottom wall of the groove forms a fragile region. The bottom wall of the groove is weaker than the remaining region of the separation component 40, and can be easily broken by the emissions. Therefore, when the first pressure relief mechanism 213 is actuated, the emissions can break the bottom wall of the groove and enter the exhaust cavity.

Optionally, the fragile region may be formed as a pressure relief region 410 in the separation component 40 in other manners. For example, a nick is created in the separation component 40 to form fragile region, or the like. The formation manner of the fragile region is not particularly limited herein.

The fencing mechanism 30 is configured to enclose a space corresponding to the pressure relief region 410 in the separation component 40, so as to be able to receive the emissions expelled through the first pressure relief mechanism 213 and the pressure relief region 410, and guide the emissions along a desired path.

Based on the technical solutions disclosed in these embodiments, a pressure relief region 410 is disposed in the separation component 40, thereby more effectively allowing the emissions expelled from the first pressure relief mechanism 213 to pass, and preventing the emissions from impacting the electrical component in the electrical cavity. The fencing mechanism 30 encloses the space corresponding to the pressure relief region 410, thereby indirectly enclosing the space corresponding to the first pressure relief mechanism 213 of the battery cell 20, and in turn, effectively guiding the emissions and comprehensively ensuring high safety performance of the battery 10.

Optionally, in the above embodiments of this application, the separation component 40 may be a thermal management component. The thermal management component is configured to regulate temperature of the battery cell 20. Optionally, the thermal management component may be configured to accommodate a fluid to regulate temperature for a plurality of battery cells. The fluid here may be a liquid or gas, and the temperature regulation means heating or cooling the plurality of battery cells. In a case of cooling down or lowering the temperature of the battery cells, the thermal management component is configured to accommodate the cooling fluid to lower the temperature of the plurality of battery cells. In this case, the thermal management component is also referred to as a cooling component, a cooling system, a cooling plate, or the like. The fluid accommodated in the thermal management component is also referred to as a cooling medium or a cooling fluid, and more specifically, referred to as a cooling liquid or a cooling gas. In addition, the thermal management component is further configured to heat up and raise the temperature of the plurality of battery cells. The use of the thermal management component is not limited herein. Optionally, the fluid may circulate in order to achieve a better effect of temperature regulation. Optionally, the fluid may be water, a mixture of water and ethylene glycol, air, or the like.

Based on the technical solutions disclosed in these embodiments, the thermal management component is versatilely used as a separation component 40, thereby partitioning off an electrical cavity and an exhaust cavity isolated from each other in the box 110 to ensure high safety of the battery 10. In addition, due to presence of the thermal management component, the battery cell 20 can be further thermally managed to further enhance the safety performance of the battery 10.

FIG. 13 is a schematic bottom view of the battery 10 shown in FIG. 12.

As shown in FIG. 13, the battery 10 may include a plurality of fencing mechanisms 30. Each fencing mechanism 30 is configured to enclose a space corresponding to a group of pressure relief regions 410. The group of pressure relief regions 410 corresponds to the first pressure relief mechanism 213 of a group of battery cells 20.

As an example, FIG. 13 shows two adjacent fencing mechanisms 30. The openings 301 of the two fencing mechanisms 30 may be located in a middle region of the exhaust cavity. Alternatively, in alternative embodiments, the openings 301 of the two fencing mechanisms 30 may be designed in other manners.

For example, FIG. 14 shows two schematic structural diagrams of a fencing mechanism 30 that encloses a pressure relief region 410 according to an embodiment of this application.

As shown in subfigure (a) of FIG. 14, in this embodiment, the two fencing mechanisms 30 are disposed in a way similar to FIG. 13 except that the opening 301 is smaller than the opening 301 shown in FIG. 13. Based on the technical solution of this embodiment, the fencing mechanism 30 can guide the emissions more efficiently, thereby further prolonging the exhaust path of the emissions in the exhaust cavity.

As shown in subfigure (b) of FIG. 14, in this embodiment, among the two fencing mechanisms 30, two openings 301 may be created on one fencing mechanism 30, and one opening 301 is formed on the other fencing mechanism 30. The three openings 301 are staggered from each other to avoid the formation of a direct convection flow between the two first exhaust spaces 310 corresponding to the two fencing mechanisms 30. The staggered arrangement prevents the high-temperature emissions from causing a wider range of impact and damage, and prevents overpressure of the first exhaust space 310, thereby ensuring high safety performance of the battery 10.

It is hereby noted that FIG. 13 and FIG. 14 merely illustrate how two adjacent fencing mechanisms 30 enclose the pressure relief region 410. In other alternative embodiments, the number of fencing mechanisms 30 may be 1, or 3 or more. The arrangement manner of the openings 301 in the fencing mechanisms 30 may correlate with the second pressure relief mechanism 113. For specific design, reference may be made to the description about the embodiment described above, details of which are omitted here.

On the basis of the fencing mechanisms 30 described in the embodiment above, optionally, a first filter hole 302 is further formed in the fencing mechanism 30. The first filter hole 302 is configured to filter out solid particles in the emissions. Optionally, the diameter of the exhaust hole is less than a radial dimension of the opening 301.

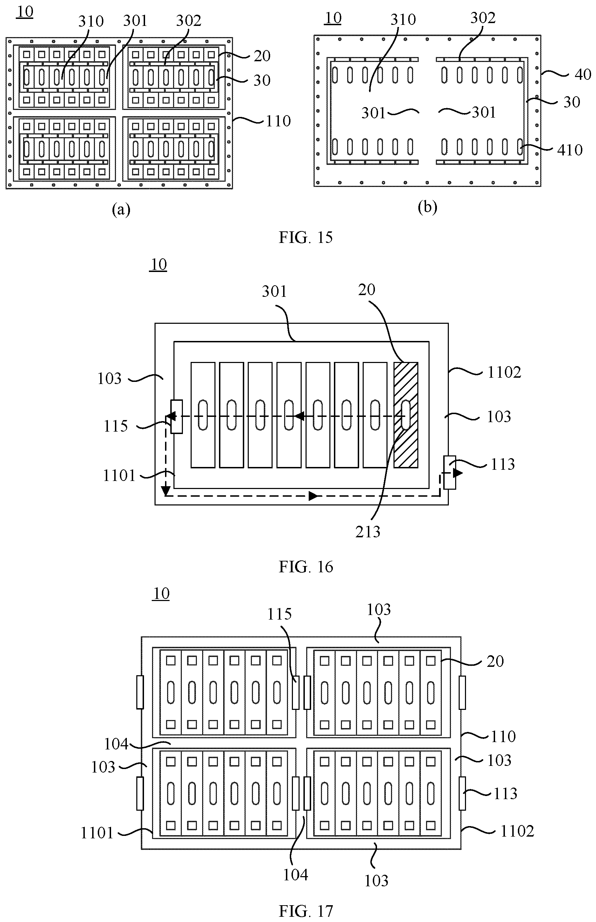

As an example, FIG. 15 shows two other schematic structural diagrams of a battery 10 according to an embodiment of this application. Optionally, subfigure (a) of FIG. 15 may be a top view of the embodiment shown in FIG. 10, and subfigure (b) of FIG. 15 may be a bottom view of the embodiment shown in FIG. 12.

As shown in FIG. 15, the fencing mechanism 30 includes a plurality of smaller-sized first filter holes 302 in addition to the larger-sized opening 301. The plurality of first filter holes 302 may be equally spaced or non-equally spaced apart in the fencing mechanism 30. Optionally, the position design and the position design of the first filter holes 302 may be the same as the relevant design of the openings 301 described above. For example, the first filter holes 302 may be disposed at positions away from the second pressure relief mechanism 113 in the fencing mechanism 30, and/or, the first filter holes 302 may be oriented toward a box wall other than the box wall on which the second pressure relief mechanism 113 is located in the box 110.

Similar to the role of the openings 301, the first filter holes 302 may also be configured to expel the emissions of the battery cell 20 that are expelled through the first pressure relief mechanism 213. However, the first filter holes 302 are primarily configured to allow the gas in the emissions to pass. The solid particles of a large size in the emissions can be filtered out by the first filter holes 302. The solid particles are unable to be expelled out of the first exhaust space 310 through the first filter hole 302. Therefore, this technical solution can reduce the high-temperature solid particles expelled to the second pressure relief mechanism 113, thereby further enhancing the safety of the battery 10.

Further, the first filter holes 302 disposed in the fencing mechanism 30 can increase the exhaust speed and the pressure relief speed of the first exhaust space 310, and prevent overpressure of the first exhaust space 310. At the same time, in a case that a plurality of first filter holes 302 are created, the airflow expelled from the plurality of first filter holes 302 can collide with each other to produce a turbulent flow, thereby reducing the hazards generated by the straight rushing gas.

Optionally, in some embodiments, the fencing mechanism 30 may be a discrete structure. The fencing mechanism 30 is formed by a plurality of fencing portions. A clearance between two adjacent fencing portions among the plurality of fencing portions forms the first filter hole 302.

Based on the technical solutions disclosed in these embodiments, on the basis of forming the first filter holes 302, the discrete design of the fencing mechanism 30 increases the processing convenience. The fencing mechanism 30 does not need to be molded in one piece, but a plurality of fencing sub-structures can be manufactured separately to form the fencing mechanism 30.

Optionally, a diameter D of the first filter hole and a volumetric energy density E of the battery cell 20 satisfy the following relationship: $0.0001 \text{ mm/(Wh/L)} \le D/E \le 0.006 \text{ mm/(Wh/L)}$, where D is in units of mm, and E is in units of Wh/L.

Specifically, the diameter of the first filter hole 302 needs to be less than or equal to a preset value to prevent the first filter hole 302 from becoming a main flow channel, that is, to prevent the fencing mechanism 30 from failing. When the fencing mechanism 30 fails, the fencing mechanism is unable to well baffle and guide the solid particles in the emissions. Therefore, a large amount of solid particles may quickly rush out of the second pressure relief mechanism 113, leading to deflagration outside the battery 10.

In addition, the diameter of the first filter hole 302 needs to be greater than or equal to a preset value, so that the first filter hole 302 allows the gas in the emissions to pass at a specified speed and plays a role in relieving pressure for the first exhaust space 310.

As an example, Table 4 below shows experimental data about the ratio of the diameter D of the first filter hole to the volumetric energy density E of the battery cell 20, and the status of the box 110.

**Table 4**

| D (mm) | E (Wh/L) | D/E (mm/(Wh/L)) | Box status |
|--------|----------|-----------------|------------|
| 0.08 | 1000 | 0.00008 | Sealing failure |
| 0.1 | 1000 | 0.0001 | Normal |
| 1.5 | 1000 | 0.0015 | Normal |
| 2 | 1000 | 0.002 | Normal |
| 3.5 | 1000 | 0.0035 | Ejecting a few sparks |
| 0.1 | 700 | 0.00014 | Normal |
| 1.5 | 700 | 0.0021 | Normal |
| 2 | 700 | 0.0029 | Normal |
| 3.5 | 700 | 0.005 | Ejecting a few sparks |

(continued)

| D (mm) | E (Wh/L) | D/E (mm/(Wh/L)) | Box status |
|--------|----------|-----------------|------------|
| 8 | 700 | 0.0114 | Flames |
| 0.1 | 500 | 0.0002 | Normal |
| 1.5 | 500 | 0.003 | Normal |
| 3 | 500 | 0.006 | Ejecting a few sparks |
| 5 | 500 | 0.01 | Flames |

As can be seen from Table 4 above, when the D/E ratio is less than 0.0001 mm/(Wh/L) or greater than 0.006 mm/(Wh/L), the box 110 may incur phenomena such as flames or a sealing failure, thereby posing severe safety hazards to the battery 10.

When the D/E ratio is greater than or equal to 0.0001 mm/(Wh/L) and less than or equal to 0.006 mm/(Wh/L), the box 110 is in a normal state or just incurs phenomena such as a small amount of sparks ejected. The small amount of sparks are less hazardous to the battery 10, and the battery 10 is still usable.

In some embodiments, the D/E ratio may satisfy the following relationship: $0.0001\ mm/(Wh/L) \leq D/E \leq 0.003\ m/(Wh/L)$. Referring to the table above, in such embodiments, the box 110 can keep in a normal state reliably. In this case, the overall performance of the battery 10 is good, and both the safety performance and the sealing performance of the battery are ensured to be superior.

Therefore, based on the technical solutions disclosed in these embodiments of this application, the size of the first filter hole 302 may be designed based on the volumetric energy density of the battery cell 20. In this way, the first filter hole 302 is made adaptable to the scenario of thermal runaway of the battery cell 20, and well filters out the solids and expels gases in the fencing mechanism 30, thereby comprehensively enhancing the safety performance of the battery 10.

Optionally, in the above embodiments of this application, the melting point of the material of the fencing mechanism 30 is not lower than 200 °C.

In some embodiments, the material of the fencing mechanism 30 may be a metal material with a melting point of 300 °C or above. The fencing mechanism 30 is applicable to batteries 10 of a relatively high energy density. Optionally, the material of the fencing mechanism 30 may be a non-metal material, such as rubber, mica, carbon fibers, melamine foam, or foamed polyurethane. In this case, the carbonization temperature of the fencing mechanism 30 is not less than 200 °C.

Based on the technical solutions disclosed in these embodiments, the fencing mechanism 30 is made of a high-temperature-resistant material and can withstand the impact of high-temperature emissions expelled from the battery cell 20, prevent the high-temperature emissions from impairing the reliability of the fencing mechanism 30 in use, and comprehensively ensure high safety performance of the battery 10.

Related technical solutions of the fencing mechanism 30 configured to form an exhaust passage in some embodiments of this application are described above with reference to FIG. 5 to FIG. 15. The following describes other technical solutions to forming an exhaust passage in some embodiments of this application with reference to FIG. 16 to FIG. 23.

FIG. 16 shows another schematic structural diagram of a battery 10 according to an embodiment of this application. Optionally, FIG. 16 may be a top view, bottom view, or side view of the battery 10.

As shown in FIG. 16, in this embodiment of this application, at least one box wall of the box 110 is a hollow box wall 103. The second pressure relief mechanism 113 is disposed on an outer surface 1102 of the hollow box wall 103. An exhaust port 115 is disposed on an inner surface 1101 of the hollow box wall 103. An internal space between the inner surface 1101 and the outer surface 1102 of the hollow box wall 103 forms at least a part of the exhaust passage.

Specifically, in this embodiment of this application, the box 110 includes at least one hollow box wall 103. The internal space between the inner surface 1101 and the outer surface 1102 of the hollow box wall 103 is a hollow space. The inner surface 1101 of the hollow box wall 103 is a surface oriented toward the internal accommodation space of the box 110 in the hollow box wall 103. Opposite to the inner surface, the outer surface 1102 of the hollow box wall 103 is a surface oriented toward the external space of the box 110 in the hollow box wall 103. The internal space between the inner surface 1101 and the outer surface 1102 of the hollow box wall 103 may form a part of the exhaust passage configured to expel the emissions of the battery cell 20 in the box 110.

Specifically, an exhaust port 115 is disposed on the inner surface 1101 of the hollow box wall 103. The exhaust port 115 is connected to the internal space of the hollow box wall 103. Further, a second pressure relief mechanism 113 is disposed on the outer surface 1102 of the hollow box wall 103. The second pressure relief mechanism 113 communicates with the exhaust port 115 through the internal space of the hollow box wall 103. Therefore, in a case that the first pressure relief mechanism 213 of the battery cell 20 is actuated to release the emissions, the emissions are expelled, through the internal space of the box 110, to the exhaust port 115 located on the inner surface 1101 of the hollow box wall 103, and then expelled to the outer surface 1102 of the hollow box wall 103 through the internal space of the hollow box wall 103. The internal space of the box 110 is configured to form a part of the exhaust passage for allowing the emissions to pass. The internal space of the hollow box wall 103 of the box 110 is configured to form another part of the exhaust passage.

Based on the technical solution disclosed in this embodiment of this application, an exhaust passage for the emissions can be formed by using the hollow box wall 103 of the box 110, thereby saving the internal space of the box 110 and increasing the energy density of the battery 10.

Optionally, in the above embodiment of this application, at least two box walls of the box 110 are hollow box walls 103. The exhaust port 115 and the second pressure relief mechanism 113 may be disposed on different hollow box walls 103 in the box 110.

As an example, as shown in FIG. 16, the exhaust port 115 and the second pressure relief mechanism 113 may be disposed on two opposite hollow box walls 103 in the box 110 respectively. The exhaust port 115 is disposed on the inner surface 1101 of one of the hollow box walls 103, and the second pressure relief mechanism 113 is disposed on the outer surface 1102 of the other hollow box wall 103. The internal spaces of the two hollow box walls 103 may communicate with each other through another component in the box 110, for example, through another hollow box wall 103 of the box 110.

Alternatively, in another example, the exhaust port 115 and the second pressure relief mechanism 113 may be disposed on the same hollow box wall 103 of the box 110. In other words, the exhaust port 115 and the second pressure relief mechanism 113 are disposed on the inner surface 1101 and the outer surface 1102 of the same hollow box wall 103 respectively, and are staggered from each other.

Based on the technical solution disclosed in this embodiment, the exhaust port 115 and the second pressure relief mechanism 113 are disposed in different hollow box walls 103 of the box 110, or, the exhaust port 115 and the second pressure relief mechanism 113 disposed on the same hollow box wall 103 are staggered from each other, thereby prolonging the exhaust path of the emissions of the battery cell 20 inside the box wall of the box 110, and in turn, reducing the temperature of the emissions arriving at the second pressure relief mechanism 113, and enhancing the safety performance of the battery 10.

FIG. 17 shows another schematic structural diagram of a battery 10 according to an embodiment of this application. Optionally, FIG. 17 may be a top view, bottom view, or side view of the battery 10.

As shown in FIG. 17, in this embodiment of this application, at least one box wall of the box 110 is a hollow box wall 103. The second pressure relief mechanism 113 is disposed on the outer surface 1102 of the hollow box wall 103. The battery 10 further includes a hollow crossbeam 104. An exhaust port 115 is disposed on the hollow crossbeam 104 and/or the inner surface 1101 of the hollow box wall 103. An internal space of the hollow crossbeam 104 communicates with an internal space of the hollow box wall 103. The internal space of the hollow crossbeam 104 and the internal space of the hollow box wall 103 form at least a part of the exhaust passage.

Specifically, the hollow crossbeam 104 in the battery 10 is disposed in the internal space of the box 110, and is configured to separate a plurality of battery cells 20 accommodated in the internal space of the box 110. At least one end of the hollow crossbeam 104 may be attached to at least one hollow box wall 103 of the box 110. The internal space of the hollow box wall 103 may communicate with the internal space of the hollow crossbeam 104.

As an example, as shown in FIG. 17, an exhaust port 115 is disposed on the hollow crossbeam 104. The exhaust port 115 may be configured to receive the emissions of the battery cell 20. The emissions enter the internal space of the hollow crossbeam 104 through the exhaust port 115, and are further expelled to the internal space of the hollow box wall 103, where the internal space of the hollow box wall communicates with the internal space of the hollow crossbeam 104. Through the internal space of the hollow box wall 103, the emissions can be further expelled to the second pressure relief mechanism 113 located on the outer surface 1102 of the hollow box wall 103, so as to be expelled out of the box 110.

In other examples, different from being positioned on the hollow crossbeam 104, the exhaust port 115 may be disposed only on the inner surface 1101 of the hollow box wall 103, or, a plurality of exhaust ports 115 are disposed on the hollow crossbeam 104 and the internal surface of the hollow box wall 103 respectively. Based on the technical solution in these examples, the emissions can also be expelled through the internal space of the hollow box wall 103 and the internal space of the hollow crossbeam 104 to the second pressure relief mechanism 113 and then out of the box 110.

In the technical solution disclosed in this embodiment, a part of the exhaust passage for the emissions may be formed by using the internal spaces of the hollow box wall 103 and/or hollow crossbeam 104 of the box 110, thereby not only saving the internal space of the box 110 and increasing the energy density of the battery 10, but also further prolonging the exhaust path of the emissions inside the box 110 and enhancing the safety performance of the battery 10.

Optionally, in some embodiments, when the number of the at least one battery cell 20 in the battery 10 is plural, the plurality of battery cells 20 include multiple groups of battery cells 20. The hollow crossbeam 104 is configured to divide an internal space of the box 110 into a plurality of subspaces. The plurality of subspaces are configured to accommodate the multiple groups of battery cells 20 respectively. On the hollow crossbeam 104, the exhaust port 115 is disposed corresponding to each of the plurality of subspaces; and/or, on the inner surface 1101 of the hollow box wall 103, the exhaust port 115 is disposed corresponding to each of the plurality of subspaces.

As an example, as shown in FIG. 17, the battery 10 may include two hollow crossbeams 104 perpendicular to each other and 4 hollow box walls 103. The end faces of the hollow crossbeams 104 may be attached to the hollow box walls 103 of the box 110. The internal space of the hollow crossbeams 104 may communicate with the internal space of the hollow box walls 103. The two hollow crossbeams 104 may divide the internal space of the box 110 into 4 subspaces. Each subspace is configured to accommodate one group of battery cells 20.

Optionally, the 4 subspaces may be isolated from each other without communicating to each other. To make it convenient to expel the emissions of the battery cell 20 accommodated in each subspace to the external environment of the box 110 effectively, an exhaust port 115, which corresponds to each subspace, is disposed on the hollow crossbeam 104. For example, in the embodiment shown in FIG. 17, 4 exhaust ports 115 may be disposed on the same hollow crossbeam 104. The 4 exhaust ports 115 correspond one-to-one with 4 subspaces. Optionally, in the embodiment shown in FIG. 17, the second pressure relief mechanism 113 is disposed on two opposite hollow box walls 103. The hollow crossbeam 104 on which an exhaust port 115 is disposed may be located between the two opposite hollow box walls 103 and parallel to the two opposite hollow box walls 103.

Optionally, in the embodiment described above, an exhaust port 115 is disposed corresponding to each subspace among the plurality of subspaces into which the box 110 is divided by the hollow crossbeam 104. Alternatively, in other alternative embodiments, a plurality of exhaust ports 115 may be disposed corresponding to each subspace.

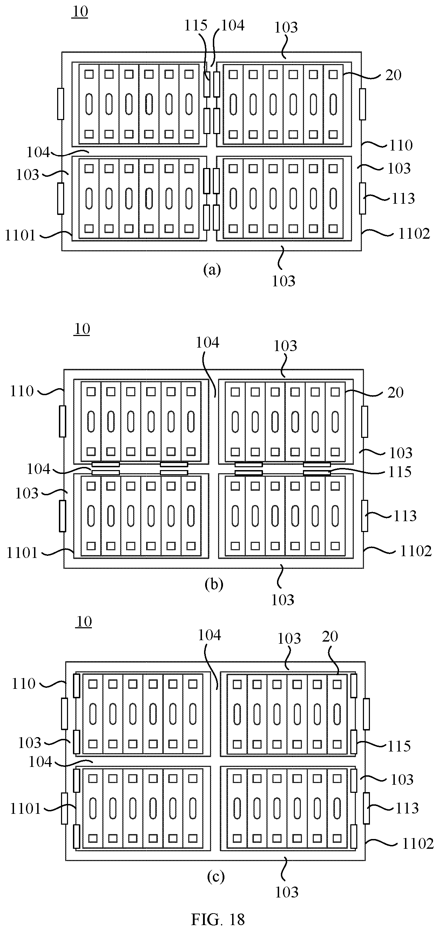

FIG. 18 shows three other schematic structural diagrams of a battery 10 according to an embodiment of this application.

As shown in FIG. 18, two mutually perpendicular hollow crossbeams 104 divide the internal space of the box 110 into 4 subspaces. 8 exhaust ports 115 may be disposed on one hollow crossbeam 104 among the two hollow crossbeams 104 and/or the inner surfaces 1101 of the hollow box walls 103. Every two exhaust ports 115 among the 8 exhaust ports 115 correspond to one of the spaces inside the box 110.

Optionally, identical to the above embodiment shown in FIG. 17, in the embodiment shown in subfigure (a) of FIG. 18, the 8 exhaust ports 115 are disposed on one hollow crossbeam 104 among the two hollow crossbeams 104. The second pressure relief mechanism 113 is disposed on two opposite hollow box walls 103. The hollow crossbeam 104 on which an exhaust port 115 is disposed may be located between the two opposite hollow box walls 103 and parallel to the two opposite hollow box walls 103.

In the embodiment shown in subfigure (b) of FIG. 18, the 8 exhaust ports 115 are disposed on the other hollow crossbeam 104 among the two hollow crossbeams 104. The second pressure relief mechanism 113 is disposed on two opposite hollow box walls 103. The hollow crossbeam 104 on which an exhaust port 115 is disposed may be connected and perpendicular to the two opposite hollow box walls 103.

In the embodiment shown in subfigure (c) of FIG. 18, the 8 exhaust ports 115 are disposed on the inner surfaces 1101 of the hollow box walls 103 of the box 110.

Based on the technical solutions disclosed in these embodiments of this application, when the hollow crossbeam 104 divides the internal space of the box 110 into a plurality of subspaces, it is convenient to reduce or even prevent the battery cell 20 accommodated in each subspace from impacting the battery cells 20 accommodated in other subspaces, thereby enhancing the safety performance of the battery 10. Further, to ensure that the emissions of the battery cell 20 accommodated in each subspace can be expelled smoothly, an exhaust port 115 is disposed on the hollow crossbeam 104 and/or the inner surface 1101 of the hollow box wall 103 in each subspace, thereby further enhancing the safety performance of the battery 10.

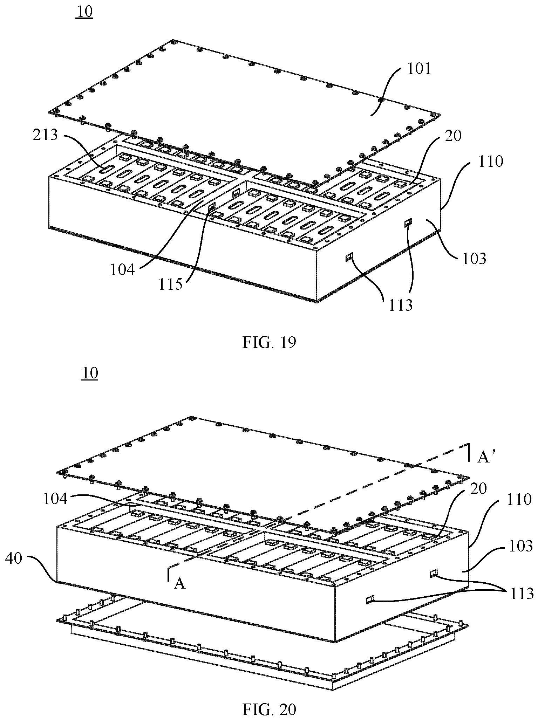

FIG. 19 shows another schematic exploded view of a battery 10 according to an embodiment of this application. Optionally, subfigure (a) of FIG. 18 may be a schematic top view of the battery 10 in the embodiment shown in FIG. 19.

In the embodiment shown in FIG. 19, the internal space in the box 110 of the battery 10 may form an electrical cavity. The electrical cavity is configured to accommodate at least one battery cell 20. The emissions expelled by the battery cell 20 upon actuation of the first pressure relief mechanism 213 of the battery cell enter the electrical cavity. The relevant settings of the hollow box wall 103, the hollow crossbeam 104, the exhaust port 115, and the second pressure relief mechanism 113 are all designed with respect to the electrical cavity.

Optionally, in the embodiment shown in FIG. 19, the first pressure relief mechanism 213 of the battery cell 20 is oriented toward the first box wall 101 of the box 110. The exhaust port 115 may be disposed in a region close to the first box wall 101 in the hollow crossbeam 104. Alternatively, in other alternative embodiments, the exhaust port 115 may be disposed at another position in the hollow crossbeam 104. The position of the exhaust port is not particularly limited herein.

Optionally, in the embodiment shown in FIG. 19, the first box wall 101 of the box 110 may be a solid wall. The hollow box wall 103 may be 4 box walls intersecting the first box wall 101. The internal spaces of the 4 hollow box walls 103 may communicate with each other, and the internal space of the hollow crossbeam 104 may communicate with the internal spaces of the 4 hollow box walls 103.

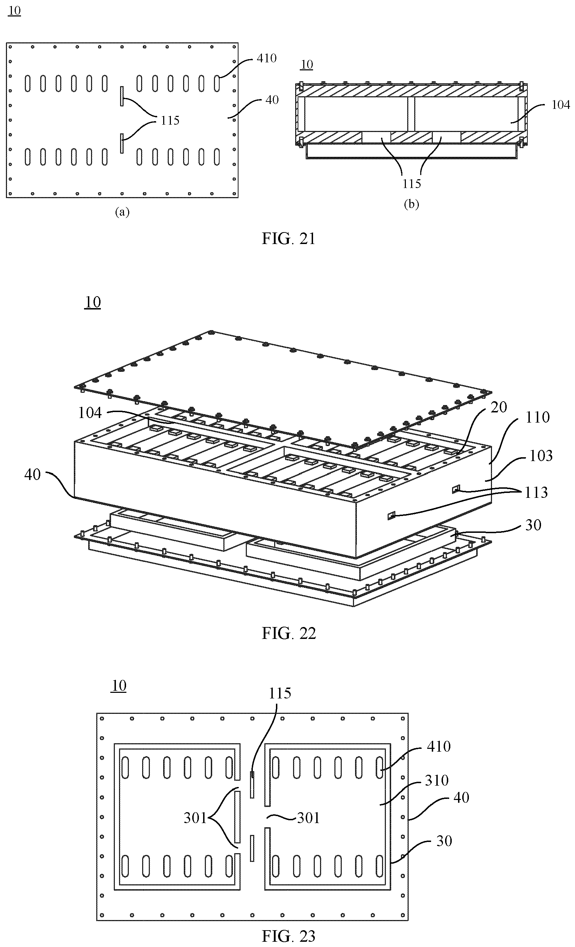

FIG. 20 shows another schematic exploded view of a battery 10 according to an embodiment of this application. FIG. 21 shows a schematic bottom view of the battery 10 shown in FIG. 20 and a cross-sectional schematic view of the battery sectioned along an A-A' direction.

As shown in FIG. 20 and FIG. 21, in this embodiment of this application, the battery 10 further includes a separation component 40. The separation component 40 is configured to form an electrical cavity and an exhaust cavity isolated from each other in an internal space of the box 110. The electrical cavity is configured to accommodate the at least one battery cell 20. The exhaust cavity is configured to receive the emissions from the at least one battery cell 20 and form at least a part of the exhaust passage. The hollow crossbeam 104 is located in the electrical cavity and connected to the separation component 40. The exhaust port 115 is disposed at a junction between the hollow crossbeam 104 and the separation component 40. The exhaust port 115 is configured to receive the emissions from the exhaust cavity.

Optionally, in this embodiment of this application, the separation component 40 may be the same as the separation component 40 in the above embodiments shown in FIG. 12 to FIG. 14. As an example, the separation component 40 may be, but is not limited to being, a thermal management component or another type of separation component.

Optionally, the separation component 40 may serve as a cavity wall in the electrical cavity. The first pressure relief mechanism 213 of the at least one battery cell 20 accommodated in the electrical cavity may be oriented toward the separation component 40, so as to make it convenient to expel the emissions of the at least one battery cell 20 into the exhaust cavity through the separation component 40. At least a part of the box walls except the separation component 40 in the electrical cavity may be a hollow box wall 103. The second pressure relief mechanism 113 may be disposed on the outer surface of the hollow box wall 103.

Optionally, as shown in subfigure (a) of FIG. 21, a pressure relief region 410 corresponding to the first pressure relief mechanism 213 of the battery cell 20 is disposed in the separation component 40. The pressure relief region 410 may be a fragile region. The strength of the fragile region may be less than the strength of regions other than the pressure relief region 410 in the separation component 40. Therefore, when the first pressure relief mechanism 213 of the battery cell 20 is actuated, the emissions can easily enter the exhaust cavity through the first pressure relief mechanism 213 and the pressure relief region 410 corresponding to the first pressure relief mechanism 213.

Further, the electrical cavity may accommodate a hollow crossbeam 104 in addition to at least one battery cell 20. As shown in FIG. 20, the hollow crossbeam 104 may be connected to a box wall of the electrical cavity. Specifically, the hollow crossbeam 104 may be connected to a hollow box wall 103 on which a second pressure relief mechanism 113 is disposed in the electrical cavity. The internal space of the hollow crossbeam 104 may communicate with the internal space of the hollow box wall 103.

As shown in subfigure (b) of FIG. 21, the hollow crossbeam 104 may be not only connected to the hollow box wall 103, but the hollow crossbeam 104 may also be connected to a separation component 40. An exhaust port 115 may be disposed at a junction between the hollow crossbeam 104 and the separation component 40. Specifically, exhaust ports 115 corresponding to each other may be disposed on the hollow crossbeam 104 and the separation component 40 respectively. The exhaust ports 115 may communicate with the internal space of the hollow crossbeam 104 and the exhaust cavity. In this way, the emissions of the battery cell 20 expelled into the exhaust cavity can enter the internal space of the hollow crossbeam 104 through the exhaust ports 115, and then arrive at the second pressure relief mechanism 113 through the internal space of the hollow box wall 103, where the internal space of the hollow box wall communicates with the internal space of the hollow crossbeam 104, so that the emissions are expelled out of the box 110.

In this embodiment, the exhaust passage inside the box 110 may include the exhaust cavity, the internal space of the hollow crossbeam 104, and the internal space of the hollow box wall 103. The length of the exhaust passage and the length of the exhaust path of the emissions in the exhaust passage may correlate with the dimensions of such spaces.

Based on the technical solution disclosed in this embodiment of this application, the box 110 is partitioned by the separation component 40 into an electrical cavity and an exhaust cavity isolated from each other. Therefore, the emissions of the battery cell 20 in the electrical cavity are expelled into the exhaust cavity through the separation component 40, without impacting the electrical structure of the battery cell 20 in the electrical cavity, thereby improving the safety performance of the battery 10. Further, the internal spaces of the hollow crossbeam 104 and the hollow box wall 103 in the electrical cavity also serve as an exhaust passage for the emissions, thereby further prolonging the exhaust path of the emissions inside the box 110, and enhancing the safety performance of the battery 10.

On the basis of the embodiments shown in FIG. 20 to FIG. 21, FIG. 22 shows another schematic exploded view of a battery 10 according to an embodiment of this application. FIG. 23 is a schematic bottom view of the battery 10 shown in FIG. 22.

As shown in FIG. 22 and FIG. 23, on the basis of the batteries 10 shown in FIG. 20 and FIG. 21, the battery 10 further includes a fencing mechanism 30. The fencing mechanism 30 is disposed in the exhaust cavity. A pressure relief region 410 corresponding to the first pressure relief mechanism 213 of the at least one battery cell 20 is formed in the separation component 40. The emissions of the at least one battery cell 20 are expelled into the exhaust cavity through the pressure relief region 410. The fencing mechanism 30 is configured to close in to form, in the exhaust cavity, a first exhaust space 310 corresponding to the pressure relief region 410. An opening 301 communicating with the first exhaust space 310 is created on the fencing mechanism 30. The first exhaust space 310 is configured to form at least a part of the exhaust passage.

Optionally, the fencing mechanism 30 in this embodiment of this application may be the fencing mechanisms 30 in the embodiments shown in FIG. 12 to FIG. 14 described above. The fencing mechanism 30 is disposed in the exhaust cavity, and can guide the path of the emissions expelled into the exhaust cavity, thereby further prolonging the exhaust path of the emissions inside the box 110, and enhancing the safety performance of the battery 10.

As an example, the fencing mechanism 30 shown in FIG. 23 may be the fencing mechanism 30 shown in subfigure (b) of FIG. 14, or, in other examples, the fencing mechanism 30 shown in FIG. 23 may be the fencing mechanism 30 shown in subfigure (a) of FIG. 14 or shown in FIG. 13. The specific structure of the fencing mechanism 30 is not limited herein.

Optionally, in the above embodiment of this application, a second filter hole is created on the inner surface of a hollow box wall 103 and/or on a hollow crossbeam 104. The second filter hole is configured to filter out solid particles in the emissions.

Specifically, in this embodiment of this application, the second filter hole created in the inner surface of the hollow box wall 103 and/or on the hollow crossbeam 104 is primarily configured to allow the gas in the emissions to pass. The solid particles of a large size in the emissions can be filtered out by the second filter hole. The solid particles are unable to be expelled to the second pressure relief mechanism 113 through the second filter hole. Therefore, this technical solution can reduce the high-temperature solid particles expelled to the second pressure relief mechanism 113, thereby further enhancing the safety of the battery 10.

Optionally, for the design of the diameter of the second filter hole, reference may be made to the relevant technical solution of the first filter hole 302 described above. To be specific, the diameter D' of the second filter hole and the volumetric energy density E of the battery cell satisfy the following relationship: $0.0001 \text{ mm/(Wh/L)} \leq D'/E \leq 0.006 \text{ mm/(Wh/L)}$, where D' is in units of mm, and E is in units of Wh/L.

Optionally, in the above embodiment of this application, at least one of a filter component, a gas absorption component, or a cooling component is disposed in the exhaust passage of the emissions between the first pressure relief mechanism 213 and the second pressure relief mechanism 113.

Specifically, the filter component may be configured to filter out solid particles in the emissions. The gas absorption component may be configured to absorb a combustible gas in the emissions. The cooling component may be configured to absorb heat of the emissions to cool down the emissions.

At least one of the filter component, the gas absorption component, or the cooling component is disposed in the exhaust path, thereby further reducing the hazards of the emissions expelled out of the box 110, and enhancing the safety performance of the battery 10.

Optionally, the filter component may include a third filter hole or a bent airflow channel. The third filter hole or the bent airflow channel is configured to filter out solid particles in the emissions.

Specifically, the design of the third filter hole may be the same as the design of the first filter hole 302 described above. Optionally, for the design of the diameter of the third filter hole, reference may be made to the relevant technical solution of the first filter hole 302 described above. To be specific, the diameter D" of the third filter hole and the volumetric energy density E of the battery cell satisfy the following relationship: $0.0001 \text{ mm/(Wh/L)} \leq D''/E \leq 0.006 \text{ mm/(Wh/L)}$, where D" is in units of mm, and E is in units of Wh/L.

In addition, when the emissions pass through a bent airflow channel, the solid particles in the emissions are prone to reside in the airflow channel, thereby exerting a filtering effect. In addition, the airflow channel can also play a role of a turbulent flow to prevent the airflow in the emissions from rushing straight and causing damage to the box 110.

Optionally, the gas absorption component is formed by a gas absorption material. The gas absorption material is configured to absorb a combustible gas in the emissions.

Optionally, the gas absorption material may be a solid material or a liquid material. For example, the gas absorption material may be a material of a microporous structure, such as activated carbon. For another example, the gas absorption material may be a solvent capable of absorbing combustible gases. A solvent encapsulation body may be formed by coating the solvent with a shell. The solvent encapsulation body is disposed as a gas absorption component in the exhaust path between the first pressure relief mechanism 213 and the second pressure relief mechanism 113.

In some embodiments, the gas absorption component and the filter component may be two separate stand-alone components. Alternatively, in some other embodiments, the gas absorption component and the filter component may be connected to each other. For example, the gas absorption component may be applied to the filter component in the form of a coating layer.

Optionally, the cooling component is formed by a heat absorption material. The heat absorption material is configured to absorb heat of the emissions to cool the emissions. As an example but not limitation, the heat absorption material may be a metal material, such as aluminum, copper, or steel. Alternatively, the heat absorption material may be a phase change material such as a cooling liquid.

In some embodiments, the cooling component and the filter component may be two separate stand-alone components. Alternatively, in some other embodiments, the cooling component and the filter component may be integrated as one piece. For example, a second filter hole or a bent airflow channel is formed on a heat absorption material to serve as a both cooling component and a filter component.

Optionally, in the above embodiments of this application, a maximum temperature T1 of the emissions at the first pressure relief mechanism 213 and a maximum temperature T2 of the emissions at the second pressure relief mechanism 113 satisfy the following relationship: T1 - T2 ≥ 300 °C.

Based on the technical solutions disclosed in these embodiments, after the emissions of the battery cell 20 expelled through the first pressure relief mechanism 213 travel a relatively long exhaust path inside the box 110, the maximum temperature of the emissions arriving at the second pressure relief mechanism 113 is much lower than that at the first pressure relief mechanism 213, thereby preventing safety hazards caused by the emissions expelled out of the battery 10.

Optionally, in the above embodiment of this application, the maximum temperature of the emissions at the second pressure relief mechanism 113 satisfies: T2 ≤ 300 °C.

Based on the technical solutions disclosed in these embodiments, after the emissions of the battery cell 20 expelled through the first pressure relief mechanism 213 travel a relatively long exhaust path inside the box 110, the maximum temperature of the emissions arriving at the second pressure relief mechanism 113 is relatively low, thereby more reliably preventing safety hazards caused by the emissions expelled out of the battery 10, and ensuring high safety performance of the battery 10. An embodiment of this application further provides an electrical device. The electrical device may include the battery 10 according to any one of the foregoing embodiments. The battery 10 is configured to provide electrical energy for the electrical device. Optionally, the electrical device may be a vehicle 1, watercraft, or spacecraft.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

**Claims**

1. A battery (10), **characterized in that**:
   the battery comprises:

   at least one battery cell (20), comprising a first pressure relief mechanism (213); and
   a box (110), configured to accommodate the at least one battery cell (20), wherein:

   the box (110) comprises a second pressure relief mechanism (113),
   an exhaust passage is formed between the first pressure relief mechanism (213) of the at least one battery cell (20) and the second pressure relief mechanism (113) of the box (110),
   when the first pressure relief mechanism (213) is actuated, the exhaust passage is configured to expel emissions of the at least one battery cell (20) from the first pressure relief mechanism (213) to the second pressure relief mechanism (113), and
   a minimum length of an exhaust path of the emissions in the exhaust passage is 0.1 m to 10 m.

2. The battery (10) according to claim 1, wherein the minimum length of the exhaust path is 0.3 m to 5 m.

3. The battery (10) according to claim 1 or 2, wherein the minimum length of the exhaust path is greater than a shortest distance between the first pressure relief mechanism (213) and the second pressure relief mechanism (113).

4. The battery (10) according to any one of claims 1 to 3, wherein the minimum length B of the exhaust path and a volumetric energy density E of the battery cell (20) satisfy the following relationship: $0.0001 \text{ m/(Wh/L)} \leq B/E \leq 0.01 \text{ m/(Wh/L)}$, B is in units of m, and E is in units of Wh/L.

5. The battery (10) according to claim 4, wherein the minimum length B of the exhaust path and the volumetric energy density E of the battery cell (20) satisfy the following relationship: $0.0002 \text{ m/(Wh/L)} \leq B/E \leq 0.005 \text{ m/(Wh/L)}$.

6. The battery (10) according to any one of claims 1 to 5, wherein the minimum length B of the exhaust path, a shortest distance A between the first pressure relief mechanism (213) and the second pressure relief mechanism (113), and a volumetric energy density E of the battery cell (20) satisfy the following relationship: $0.0015 \text{ L/Wh} \leq (B/A)/E \leq 0.08 \text{ L/Wh}$, wherein A and B are in units of m, and E is in units of Wh/L.

7.   The battery (10) according to claim 6, wherein the minimum length B of the exhaust path, the shortest distance A between the first pressure relief mechanism (213) and the second pressure relief mechanism (113), and the volumetric energy density E of the battery cell (20) satisfy the following relationship: $0.003\,L/Wh \le (B/A)/E \le 0.04\,L/Wh$.

8.   The battery (10) according to any one of claims 1 to 7, wherein the battery (10) further comprises: a fencing mechanism (30), configured to close in to form a first exhaust space (310) corresponding to the first pressure relief mechanism (213) of the at least one battery cell (20), an opening (301) communicating with the first exhaust space (310) is created on the fencing mechanism (30), and the first exhaust space (310) is configured to form at least a part of the exhaust passage.

9.   The battery (10) according to claim 8, wherein the opening (301) is located at a position in the fencing mechanism (30), the position away from the second pressure relief mechanism (113).

10.  The battery (10) according to claim 8 or 9, wherein the opening (301) is oriented toward a box wall in the box (110), the box wall different from a box wall on which the second pressure relief mechanism (113) is located.

11.  The battery (10) according to any one of claims 8 to 10, wherein the opening (301) is located in a middle region of the box (110).

12.  The battery (10) according to any one of claims 8 to 11, wherein a plurality of the fencing mechanisms (30) are disposed, and the plurality of fencing mechanisms (30) are spaced apart.

13.  The battery (10) according to claim 12, wherein openings (301) of two adjacent fencing mechanisms (30) in the plurality of fencing mechanisms (30) are disposed on two adjacent walls in the two adjacent fencing mechanisms (30), and the openings (301) of the two adjacent fencing mechanisms (30) are staggered from each other.

14.  The battery (10) according to any one of claims 8 to 13, wherein the first pressure relief mechanism (213) is disposed on a first wall (201) of the at least one battery cell (20), the first wall (201) of the at least one battery cell (20) is disposed opposite to a first box wall (101) of the box (110), and the fencing mechanism (30) is disposed between the first box wall (101) and the first wall (201) of the at least one battery cell (20).

15.  The battery (10) according to claim 14, wherein the fencing mechanism (30) is attached to the first box wall (101) and the first wall (201) of the at least one battery cell (20), and the second pressure relief mechanism (113) is disposed on a box wall other than the first box wall (101) in the box (110).

16.  The battery (10) according to claim 15, wherein a second box wall (102) of the box (110) intersects the first box wall (101) of the box (110), and the second pressure relief mechanism (113) is disposed on the second box wall (102); and a second exhaust space (320) is formed between the fencing mechanism (30) and the second box wall (102), the second exhaust space (320) communicates with the first exhaust space (310) through the opening (301), and the emissions enter the second exhaust space (320) through the opening (301) and are expelled to the second pressure relief mechanism (113).

17.  The battery (10) according to any one of claims 14 to 16, wherein the at least one battery cell (20) is arranged to form a cell sequence, two electrode terminals (214) are disposed on the first wall (201) of each battery cell (20) in the cell sequence, the first pressure relief mechanism (213) is disposed between the two electrode terminals (214), and the fencing mechanism (30) is disposed between the two electrode terminals (214) of each battery cell (20) in the cell sequence.

18.  The battery (10) according to claim 14, wherein a separation component (40) is disposed between the first box wall (101) and the first wall (201) of the at least one battery cell (20), and the separation component (40) is configured to form an electrical cavity and an exhaust cavity isolated from each other inside the box (110); and the electrical cavity is configured to accommodate the at least one battery cell (20), the emissions of the at least one battery cell (20) are expelled into the exhaust cavity through the separation component (40), the fencing mechanism (30) is disposed in the exhaust cavity, the fencing mechanism (30) is attached to the separation component (40) and the first box wall (101), the fencing mechanism (30) is configured to close in to form the first exhaust space (310) in the exhaust cavity, and the first exhaust space corresponds to the first pressure relief mechanism (213) of the at least one battery cell (20).

19. The battery (10) according to claim 18, wherein the second pressure relief mechanism (113) is disposed on a box wall corresponding to the exhaust cavity in the box (110).

20. The battery (10) according to claim 18 or 19, wherein the second pressure relief mechanism (113) is disposed on a box wall different from the first box wall (101) in the box (110).

21. The battery (10) according to any one of claims 18 to 20, wherein a pressure relief region (410) corresponding to the first pressure relief mechanism (213) of the at least one battery cell (20) is formed in the separation component (40), the emissions of the at least one battery cell (20) are expelled into the exhaust cavity through the pressure relief region (410), and the fencing mechanism (30) is configured to close in to form, in the exhaust cavity, the first exhaust space (310) corresponding to the pressure relief region (410).

22. The battery (10) according to any one of claims 18 to 21, wherein the separation component (40) is a thermal management component, and the thermal management component is configured to regulate temperature of the battery cell (20).

23. The battery (10) according to any one of claims 8 to 22, wherein a first filter hole (302) is formed in the fencing mechanism (30), and the first filter hole (302) is configured to filter out solid particles in the emissions.

24. The battery (10) according to claim 23, wherein the fencing mechanism (30) is a discrete structure, the fencing mechanism (30) is formed by a plurality of fencing portions, and a clearance between two adjacent fencing portions among the plurality of fencing portions forms the first filter hole (302).

25. The battery (10) according to claim 23 or 24, wherein a diameter D of the first filter hole (302) and a volumetric energy density E of the battery cell (20) satisfy the following relationship:

$$0.0001 \text{ mm/(Wh/L)} \le D/E \le 0.006 \text{ mm/(Wh/L)},$$

wherein D is in units of mm, and E is in units of Wh/L.

26. The battery (10) according to any one of claims 8 to 25, wherein a melting point of a material of the fencing mechanism (30) is not lower than 200 °C.

27. The battery (10) according to any one of claims 1 to 7, wherein at least one box wall of the box (110) is a hollow box wall (103), the second pressure relief mechanism (113) is disposed on an outer surface of the hollow box wall (103), an exhaust port (115) is disposed on an inner surface of the hollow box wall (103), and an internal space between the inner surface and the outer surface of the hollow box wall (103) forms at least a part of the exhaust passage.

28. The battery (10) according to claim 27, wherein at least two box walls of the box (110) are hollow box walls (103), and the exhaust port (115) and the second pressure relief mechanism (113) are disposed on different hollow box walls (103); or
the exhaust port (115) and the second pressure relief mechanism (113) are disposed on a same hollow box wall (103), and the exhaust port (115) and the second pressure relief mechanism (113) are staggered from each other.

29. The battery (10) according to any one of claims 1 to 7, wherein at least one box wall of the box (110) is a hollow box wall (103), and the second pressure relief mechanism (113) is disposed on an outer surface of the hollow box wall (103); and
the battery (10) further comprises a hollow crossbeam (104), wherein an exhaust port (115) is disposed on the hollow crossbeam (104) and/or an inner surface of the hollow box wall (103), an internal space of the hollow crossbeam (104) communicates with an internal space of the hollow box wall (103), and the internal space of the hollow crossbeam (104) and the internal space of the hollow box wall (103) form at least a part of the exhaust passage.

30. The battery (10) according to claim 29, wherein when the number of the at least one battery cell (20) is plural, the plurality of battery cells (20) comprise multiple groups of battery cells (20), the hollow crossbeam (104) is configured to divide an internal space of the box (110) into a plurality of subspaces, and the plurality of subspaces are configured to accommodate the multiple groups of battery cells (20) respectively;

on the hollow crossbeam (104), the exhaust port (115) is disposed corresponding to each of the plurality of subspaces; and/or
on the inner surface of the hollow box wall (103), the exhaust port (115) is disposed corresponding to each of the plurality of subspaces.

31. The battery (10) according to claim 29, wherein the battery (10) further comprises a separation component (40), the separation component (40) is configured to form an electrical cavity and an exhaust cavity isolated from each other in an internal space of the box (110), the electrical cavity is configured to accommodate the at least one battery cell (20), the exhaust cavity is configured to receive the emissions from the at least one battery cell (20) and form at least a part of the exhaust passage; and
the hollow crossbeam (104) is located in the electrical cavity and connected to the separation component (40), the exhaust port (115) is disposed at a junction between the hollow crossbeam (104) and the separation component (40), and the exhaust port (115) is configured to receive the emissions from the exhaust cavity.

32. The battery (10) according to claim 31, wherein the battery (10) further comprises a fencing mechanism (30), and the fencing mechanism (30) is disposed in the exhaust cavity; and
a pressure relief region (410) corresponding to the first pressure relief mechanism (213) of the at least one battery cell (20) is formed in the separation component (40), the emissions of the at least one battery cell (20) are expelled into the exhaust cavity through the pressure relief region (410), the fencing mechanism (30) is configured to close in to form, in the exhaust cavity, a first exhaust space (310) corresponding to the pressure relief region (410), an opening (301) communicating with the first exhaust space (310) is created on the fencing mechanism (30), and the first exhaust space (310) is configured to form at least a part of the exhaust passage.

33. The battery (10) according to any one of claims 27 to 32, wherein a second filter hole is created on the inner surface of the hollow box wall (103) and/or on a hollow crossbeam (104), and the second filter hole is configured to filter out solid particles in the emissions.

34. The battery (10) according to any one of claims 1 to 33, wherein at least one of a filter component, a gas absorption component, or a cooling component is disposed in the exhaust passage.

35. The battery (10) according to claim 34, wherein the filter component comprises a third filter hole or a bent airflow channel, and the third filter hole or the bent airflow channel is configured to filter out solid particles in the emissions.

36. The battery (10) according to claim 34 or 35, wherein the gas absorption component is formed by a gas absorption material, and the gas absorption material is configured to absorb a combustible gas in the emissions.

37. The battery (10) according to any one of claims 34 to 36, wherein the cooling component is formed by a heat absorption material, and the heat absorption material is configured to absorb heat of the emissions to cool the emissions.

38. The battery (10) according to any one of claims 1 to 37, wherein a maximum temperature T1 of the emissions at the first pressure relief mechanism (213) and a maximum temperature T2 of the emissions at the second pressure relief mechanism (113) satisfy the following relationship:

$$T1 - T2 \geq 300\ °C.$$

39. The battery (10) according to claim 38, wherein the maximum temperature of the emissions at the second pressure relief mechanism (113) satisfies: T2 ≤ 300 °C.

40. An electrical device, wherein the electrical device comprises the battery (10) according to any one of claims 1 to 39, and the battery (10) is configured to provide electrical energy.

FIG. 1

FIG. 2

FIG. 3

FIG. 4

FIG. 5

FIG. 6

FIG. 7

10

101

301
213
214
30
201
110
102
310
320
113

FIG. 8

10

110
301
320

214
30
213
310
20

FIG. 9

10

101

310

30

20

110

301

114

113

102

FIG. 10

10

310    301

20

30                30

114                110

30                30

114

FIG. 11

FIG. 12

FIG. 13

(a)                    (b)

FIG. 14

10    310    301    302

20

30

110

(a)

10    310    302

40

30

301    301

410

(b)

FIG. 15

10

301    20

103    1102

115    103

1101    113

213

FIG. 16

10

115    103

20

104    110

103    103

113

1101    1102

104    103

FIG. 17

FIG. 18

FIG. 19

FIG. 20

FIG. 21

FIG. 22

FIG. 23

| INTERNATIONAL SEARCH Rl | International application No. |
|---|---|
| | **PCT/CN2022/125420** |

**A. CLASSIFICATION OF SUBJECT MATTER**

H01M50/358(2021.01)i; H01M50/244(2021.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 电芯, 泄压, 减压, 防爆, 阀, 通道, 路径, 通路, 开口, 长度, 厚度, 宽度, battery, cell, core, pressure, relief, valve, explosion, proof, passage, path, channel, open+, port, length, thickness, width

**C. DOCUMENTS CONSIDERED TO BE RELEVANT**

| Category* | Citation of document, with indication, where appropriate, of the relevant passages | Relevant to claim No. |
|---|---|---|
| X | CN 110165113 A (BYD CO., LTD.) 23 August 2019 (2019-08-23) description, paragraphs 75-180, and figures 1-16 | 1-40 |
| X | CN 112751121 A (GREAT WALL MOTOR CO., LTD.) 04 May 2021 (2021-05-04) description, paragraphs 36-60, and figures 1-8 | 1-40 |
| X | CN 217426941 U (SVOLT ENERGY TECHNOLOGY CO., LTD.) 13 September 2022 (2022-09-13) description, paragraphs 35-52, and figures 1-6 | 1-40 |
| A | CN 112567564 A (PANASONIC INTELLECTUAL PROPERTY MANAGEMENT CO., LTD.) 26 March 2021 (2021-03-26) entire document | 1-40 |
| A | CN 203466244 U (NINGDE AMPEREX TECHNOLOGY LTD.) 05 March 2014 (2014-03-05) entire document | 1-40 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 June 2023** | **19 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/125420** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2016301051 A1 (HITACHI AUTOMOTIVE SYSTEMS, LTD.) 13 October 2016 (2016-10-13)<br>entire document | 1-40 |

Form PCT/ISA/210 (second sheet) (July 2022)

| INTERNATIONAL SEARCH REPORT<br>Information on patent family members | | International application No.<br>**PCT/CN2022/125420** | |
|---|---|---|---|
| Patent document<br>cited in search report | Publication date<br>(day/month/year) | Patent family member(s) | Publication date<br>(day/month/year) |
| CN 110165113 A | 23 August 2019 | US 2022126666 A1 | 28 April 2022 |
| | | US 2021175572 A1 | 10 June 2021 |
| | | US 11183729 B2 | 23 November 2021 |
| | | JP 2022517213 A | 07 March 2022 |
| | | KR 20210006940 A | 19 January 2021 |
| | | KR 102483099 B1 | 30 December 2022 |
| | | KR 20230003450 A | 05 January 2023 |
| | | ES 2939728 T3 | 26 April 2023 |
| | | EP 3782837 A1 | 24 February 2021 |
| | | EP 3782837 A4 | 13 October 2021 |
| | | EP 3782837 B1 | 19 October 2022 |
| | | EP 3907777 A1 | 10 November 2021 |
| | | EP 3907777 A4 | 27 July 2022 |
| | | EP 3907776 A1 | 10 November 2021 |
| | | EP 3907776 A4 | 02 March 2022 |
| | | US 2021249725 A1 | 12 August 2021 |
| | | EP 3907775 A1 | 10 November 2021 |
| | | EP 3907775 A4 | 23 February 2022 |
| | | TW 202027326 A | 16 July 2020 |
| | | TWI 755643 B | 21 February 2022 |
| | | WO 2020143173 A1 | 16 July 2020 |
| | | KR 20200139202 A | 11 December 2020 |
| | | KR 102478780 B1 | 20 December 2022 |
| | | HUE 060771 T2 | 28 April 2023 |
| | | WO 2020143174 A1 | 16 July 2020 |
| | | EP 3907846 A1 | 10 November 2021 |
| | | EP 3907846 A4 | 23 February 2022 |
| | | JP 2022500824 A | 04 January 2022 |
| | | JP 7197689 B2 | 27 December 2022 |
| | | WO 2020143175 A1 | 16 July 2020 |
| | | WO 2020143171 A1 | 16 July 2020 |
| | | JP 2022517006 A | 03 March 2022 |
| | | US 2022118840 A1 | 21 April 2022 |
| | | WO 2020143176 A1 | 16 July 2020 |
| | | KR 20210110683 A | 08 September 2021 |
| | | KR 20210110374 A | 07 September 2021 |
| | | JP 2022517214 A | 07 March 2022 |
| | | JP 2021535556 A | 16 December 2021 |
| | | JP 7114799 B2 | 08 August 2022 |
| | | WO 2020143177 A1 | 16 July 2020 |
| | | WO 2020143172 A1 | 16 July 2020 |
| | | PT 3782837 T | 25 November 2022 |
| | | JP 2022517212 A | 07 March 2022 |
| | | WO 2020143178 A1 | 16 July 2020 |
| | | EP 3907778 A1 | 10 November 2021 |
| | | EP 3907778 A4 | 02 March 2022 |
| | | US 2022123404 A1 | 21 April 2022 |
| | | EP 3783688 A1 | 24 February 2021 |
| | | EP 3783688 A4 | 15 December 2021 |
| | | KR 20210109025 A | 03 September 2021 |

Form PCT/ISA/210 (patent family annex) (July 2022)

INTERNATIONAL SEARCH REPORT
**Information on patent family members**

International application No.

**PCT/CN2022/125420**

| Patent document cited in search report | | | Publication date (day/month/year) | Patent family member(s) | | | Publication date (day/month/year) |
|---|---|---|---|---|---|---|---|
| | | | | JP | 2022153540 | A | 12 October 2022 |
| | | | | EP | 3907774 | A1 | 10 November 2021 |
| | | | | EP | 3907774 | A4 | 23 February 2022 |
| | | | | EP | 3907774 | B1 | 08 February 2023 |
| | | | | KR | 20210109018 | A | 03 September 2021 |
| | | | | KR | 20210110695 | A | 08 September 2021 |
| | | | | TW | 202027319 | A | 16 July 2020 |
| | | | | TWI | 753316 | B | 21 January 2022 |
| | | | | JP | 2022517007 | A | 03 March 2022 |
| | | | | US | 2022126705 | A1 | 28 April 2022 |
| | | | | US | 2022102787 | A1 | 31 March 2022 |
| | | | | US | 2022118841 | A1 | 21 April 2022 |
| | | | | JP | 2022516792 | A | 02 March 2022 |
| | | | | KR | 20210109028 | A | 03 September 2021 |
| CN | 112751121 | A | 04 May 2021 | None | | | |
| CN | 217426941 | U | 13 September 2022 | None | | | |
| CN | 112567564 | A | 26 March 2021 | JPWO | 2020039722 | A1 | 26 August 2021 |
| | | | | US | 2021313650 | A1 | 07 October 2021 |
| | | | | WO | 2020039722 | A1 | 27 February 2020 |
| CN | 203466244 | U | 05 March 2014 | None | | | |
| US | 2016301051 | A1 | 13 October 2016 | JP | 2015103346 | A | 04 June 2015 |
| | | | | JP | 6192509 | B2 | 06 September 2017 |
| | | | | WO | 2015079430 | A1 | 04 June 2015 |

Form PCT/ISA/210 (patent family annex) (July 2022)